(19) Europäisches Patentamt / European Patent Office / Office européen des brevets

(11) **EP 2 423 144 B1**

(12) **EUROPEAN PATENT SPECIFICATION**

(45) Date of publication and mention
of the grant of the patent:
**25.07.2018 Bulletin 2018/30**

(51) Int Cl.:
*B65H 61/00* *(2006.01)*    *B65H 63/06* *(2006.01)*
*G01N 21/88* *(2006.01)*    *G01P 3/36* *(2006.01)*
*G01P 3/80* *(2006.01)*    *G01P 3/68* *(2006.01)*
*G01B 11/10* *(2006.01)*    *G01N 21/89* *(2006.01)*

(21) Application number: **11176868.5**

(22) Date of filing: **08.08.2011**

(54) **Yarn travelling information acquiring device and yarn winding machine**

Vorrichtung zur Erfassung von Garnstreckeninformationen und Garnwickelmaschine

Dispositif d'acquisition d'informations de déplacement de fil et machine de bobinage de fil

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2010 JP 2010194581**

(43) Date of publication of application:
**29.02.2012 Bulletin 2012/09**

(73) Proprietor: **Murata Machinery, Ltd.**
**Minami-ku**
**Kyoto-shi**
**Kyoto 601-8326 (JP)**

(72) Inventors:
• **Kawabata, Satoshi**
**Kyoto-shi, Kyoto 612-8686 (JP)**
• **Minamino, Katsushi**
**Kyoto-shi, Kyoto 612-8686 (JP)**
• **Nakatani, Masatoshi**
**Kyoto-shi, Kyoto 612-8686 (JP)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**EP-A2- 1 408 335    EP-A2- 2 090 538**
**US-A- 4 671 650    US-A1- 2005 072 902**

**Description**

BACKGROUND OF THE INVENTION

1. Field of the Invention

The present invention mainly relates to a configuration of a yarn travelling information acquiring device for detecting a state of travelling yarn.

2. Description of the Related Art

In a yarn winding device for winding yarn, information relating to a travelling state of the yarn is sometimes necessary to control the winding. Such a yarn winding device thus includes a yarn travelling information acquiring device for acquiring information relating to the travelling state of the yarn (yarn travelling information). The travelling state may include, for example, a travelling speed of the yarn.

Such a yarn travelling information acquiring device is described in Japanese Unexamined Patent Publication No. 51-60551. A yarn length and yarn speed measuring device disclosed in Japanese Unexamined Patent Publication No. 51-60551 detects a fluff, thickness unevenness, or the like of the travelling yarn with two non-contact type sensors arranged at a prescribed interval, and obtains a yarn speed and a yarn length based on how much an output signal of one sensor is delayed with respect to an output signal of the other sensor. Japanese Unexamined Patent Publication No. 51-60551 states that since the yarn length and yarn speed measuring device uses non-contact sensors, there are no problems of slippage or the like, and thus accurate measurement can be carried out.

Meanwhile, a measuring device described in Japanese Unexamined Patent Publication No. 51-60551 detects a time delay in the signals output from the two sensors by obtaining a peak of a correlated function. In this regard, Japanese Unexamined Patent Publication No. 6-186242 indicates a problem of calculating the yarn travelling speed in accordance with such a correlated function. That is, according to Japanese Unexamined Patent Publication No. 6-186242, since the correlated function has a plurality of secondary maximum points other than a main maximum point, a wrong value may be obtained as a value of time delay due to lock-in to one of the secondary maximum points. In other words, a very similar waveform may continue in the output signal from the non-contact type sensor monitoring the travelling yarn, and hence a position other than a position that should be locked-in may be locked-in. The yarn travelling speed cannot be accurately calculated if there is error in the calculation of the delay amount.

In this regard, Japanese Unexamined Patent Publication No. 6-186242 discloses a textile yarn speed measuring device having a configuration in which a model travelling time is set for a certain range using a signal from a signal generator that transmits a signal substantially proportional to a textile speed. In Japanese Unexamined Patent Publication No. 6-186242, a closed-loop control circuit of a travelling time correlator is thus promptly locked to a correct downtime maximum value of the correlated function.

Japanese Unexamined Patent Publication No. 6-186242 describes that when setting an extent of the range, it is important to narrowly select the range so that the secondary maximum point is outside the range (paragraph 0031) . That is, if the range is too wide, the secondary maximum point will be included in such a range and a risk of locking-in to the secondary maximum point (wrong maximum point) becomes high. On the other hand, if the range is too narrow, the main maximum point may move out of the range when the yarn speed is rapidly fluctuated. In this case, in the configuration of Japanese Unexamined Patent Publication No. 6-186242, lock-in cannot be made to the main maximum point.

However, it is actually difficult to conveniently select the extent of the range. Therefore, in the configuration of Japanese Unexamined Patent Publication No. 6-186242, a possibility of locking-in to the secondary maximum point (wrong maximum point) of the correlated function cannot be excluded. As a result, an object of accurately calculating the travelling speed of the yarn cannot be achieved.

EP 2 090 538 A2 discloses a method for detecting periodic unevenness of a yarn. Two yarn unevenness sensors are provided. An analysis frame is extracted from the waveform of the first sensor and compared to analysis frames extracted one after another from the waveform of the second sensor while gradually going back in time. A delay is determined based on the comparisons and the yarn speed is calculated based on the delay.

US 4 671 650 A discloses an apparatus and a method for determining aircraft position and velocity.

BRIEF SUMMARY OF THE INVENTION

An object of the present invention is to provide a yarn travelling information acquiring device capable of accurately calculating the delay amount between output waveforms of two sensors and acquiring more accurate yarn travelling information. This object is achieved by a yarn travelling information acquiring device according to claim 1.

According to a first aspect of the present invention, a yarn travelling information acquiring device includes a first detecting section, a second detecting section, a similarity degree evaluating section, a weighting processing section, and a travelling information acquiring section. The first detecting section is adapted to detect thickness unevenness in travelling yarn and output a first yarn thickness unevenness signal. The second detecting section is arranged at a prescribed distance in a yarn travelling direction from the first detecting section and adapted to detect thickness unevenness in the yarn and output a second yarn thickness unevenness signal. The similarity degree evaluating section is adapted to determine a plurality of similarity degrees of the first yarn thickness unevenness signal and the second yarn thickness unevenness signal in accordance with the first yarn thickness unevenness signal acquired within a prescribed first time range and the second yarn thickness unevenness signal acquired within a second time range that is longer than the first time range. The weighting processing section is adapted to execute a weighting processing on the plurality of the similarity degrees and determine a plurality of weighted similarity degrees. The travelling information acquiring section is adapted to calculate a time delay amount between the first yarn thickness unevenness signal and the second yarn thickness unevenness signal, and acquire travelling information of the yarn in accordance with the prescribed distance and the delay amount.

By performing the weighting processing on the similarity degrees as described above, when the plurality of maximum points of the similarity degrees exist, a probability of selecting a wrong maximum point can be lowered. The yarn travelling information acquiring device thus can accurately calculate the time delay amount of the second yarn thickness unevenness signal with respect to the first yarn thickness unevenness signal. As a result, the yarn travelling information acquiring device can acquire the accurate travelling information of the yarn.

In the above yarn travelling information acquiring device, the first detecting section is preferably arranged downstream of the second detecting section. Accordingly, since a time delay amount of an upstream past yarn thickness unevenness signal can be calculated with respect to the most recent downstream yarn thickness unevenness signal, the yarn travelling information acquiring device can detect the travelling information of the yarn in real time.

In the yarn travelling information acquiring device, the similarity degree evaluating section is adapted to determine the similarity degrees by comparing a first imaginary frame and a second imaginary frame. The first imaginary frame is formed from the first yarn thickness unevenness signal acquired within the first time range. The second imaginary frame is formed from the second yarn thickness unevenness signal acquired within the second time range and selected for a time range that is the same length as the first time range. The similarity degree evaluating section is adapted to determine a plurality of the similarity degrees by selecting a plurality of positions on a time axis of the second imaginary frame within the second time range. Therefore, the plurality of similarity degrees can be obtained within the second time range, and the weighting processing section can carry out weighting on the plurality of similarity degrees.

In the yarn travelling information acquiring device, the travelling information acquiring section preferably is adapted to acquire at least one piece of travelling information among a signal for sampling a prescribed length of the yarn, a traveled length of the yarn per unit time, and travelling speed of the yarn, in accordance with the prescribed distance and the delay amount. As described above, since the delay amount between the first yarn thickness unevenness signal and the second yarn thickness unevenness signal can be accurately calculated, the yarn travelling information acquiring device can accurately obtain the signal for sampling a prescribed length of the yarn, the traveled length of the yarn per unit time, and the travelling speed of the yarn.

In the yarn travelling information acquiring device, the weighting processing section preferably is adapted to execute the weighting processing on the similarity degree using a weighting factor designated by a weighting curve having one maximum point. By setting an appropriate weighting curve having one maximum point, the yarn travelling information acquiring device can easily calculate the time delay amount in accordance with the weighted similarity degree corresponding to the maximum point. As a result, the yarn travelling information acquiring device can accurately calculate the delay amount between the first yarn thickness unevenness signal and the second yarn thickness unevenness signal.

In the yarn travelling information acquiring device, the maximum point of the weighting curve is preferably set in accordance with a time delay amount associated with a maximum weighted similarity degree among the plurality of past weighted similarity degrees . In most cases, the travelling information of the yarn acquired by the yarn travelling information acquiring device is not significantly different from the previously acquired travelling information. Thus, reliability of the weighted similarity degree is improved by performing a large weighting on the similarity degree associated with the past maximum weighted similarity degree so that the result that is not significantly different from the previously acquired travelling information can be easily detected.

The above yarn travelling information acquiring device further includes a standard speed acquiring section adapted to acquire standard speed of travelling speed of the yarn. A maximum point of the weighting curve is set in accordance with a time delay amount associated with the standard speed. The travelling speed of the travelling yarn is assumed to fluctuate with a certain standard speed as a center. The reliability of the weighted similarity degree is improved by configuring the yarn travelling information acquiring device as described above and performing large weighting on the similarity degree associated with the standard speed.

The above yarn travelling information acquiring device further includes a standard speed acquiring section adapted to acquire standard speed of travelling speed of the yarn. A maximum point of the weighting curve is set in accordance with a weighting curve based on a time delay amount associated with a maximum weighted similarity degree among the plurality of the past weighted similarity degrees and a weighting curve based on a time delay amount associated with the standard speed. Accordingly, the yarn travelling information acquiring device can more accurately acquire the travelling information of the yarn by setting the weighting curve in accordance with the plurality of characteristics.

In the above yarn travelling information acquiring device, the standard speed acquiring section preferably is adapted to acquire information relating to rotation (hereinafter, "rotational information") of a winding drum, which drives a package around which the yarn is wound, and to obtain the standard speed in accordance with the rotational information. The travelling speed of the yarn is correlated with a rotation speed of the winding drum. As described above, the standard speed acquiring section can acquire the rotational information of the winding drum, and obtain the standard speed in accordance therewith.

The above yarn travelling information acquiring device preferably further includes a curve adjusting section adapted to adjust at least one of an influence rate at which the past maximum weighted similarity degree influences a form of the weighting curve, and an influence rate at which the standard speed influences a form of the weighting curve. Accordingly, an appropriate weighting processing can be carried out according to characteristics of the yarn travelling information acquiring device, that is, a precision of the standard speed and a magnitude in change of the yarn travelling speed (change in yarn travelling speed at a certain moment) . As a result, the yarn travelling information acquiring device can acquire accurate travelling information of the yarn in accordance with the characteristics of the yarn travelling information acquiring device and the like.

In the above yarn travelling information acquiring device, when a similarity degree of when the weighted similarity degree becomes maximum is less than a threshold determined in accordance with a past similarity degree, the travelling information acquiring section is adapted to acquire travelling information of the yarn in accordance with the past weighted similarity degree. The yarn travelling information acquiring device thus acquires the travelling information of the yarn in accordance with an appropriate similarity degree, and hence the precision of the travelling information can be further improved.

The above yarn travelling information acquiring device preferably further includes a threshold re-evaluating section adapted to perform a processing to reduce the threshold accompanying an elapse of time. The travelling information such as the travelling speed of the yarn constantly changes, and the reliability of the past similarity degree lowers. By evaluating the threshold to be smaller accompanying an elapse of time as described above, the past similarity degree with lowered reliability can be prevented from being used endlessly.

According to a second aspect of the present invention, a yarn winding machine includes the above yarn travelling information acquiring device, a winding section adapted to wind the yarn and form a package, and a control section adapted to control winding of the winding section in accordance with travelling information of the yarn detected by the yarn travelling information acquiring device. Since the yarn winding machine includes the yarn travelling information acquiring device, accurate travelling information of the yarn can be obtained. Since the yarn winding machine forms a package based on the accurate travelling information of the yarn, a uniform and high quality package can be produced.

BRIEF DESCRIPTION OF THE DRAWINGS

FIG. 1 is a side view of a winder unit;
FIG. 2 is a front view of the winder unit;
FIG. 3 is a block diagram illustrating a configuration of a clearer;
FIG. 4 is a graph illustrating data series accumulated in a ring buffer;
FIG. 5 is a view describing a calculation frame;
FIG. 6 is a view describing bias component removal and normalization;
FIG. 7 is a graph illustrating a case in which a plurality of peaks of similarity degrees exist;
FIG. 8 is a flowchart of a yarn travelling speed acquiring processing;
FIG. 9 is a view describing weighting by a weighting curve;
FIG. 10 is a flowchart of an adoption determination processing;
FIG. 11 is a view specifically describing determination for adoption of a weighted similarity degree; and
FIG. 12 is a view illustrating a weighting curve when a user constant is changed.

DETAILED DESCRIPTION OF PREFERRED EMBODIMENTS

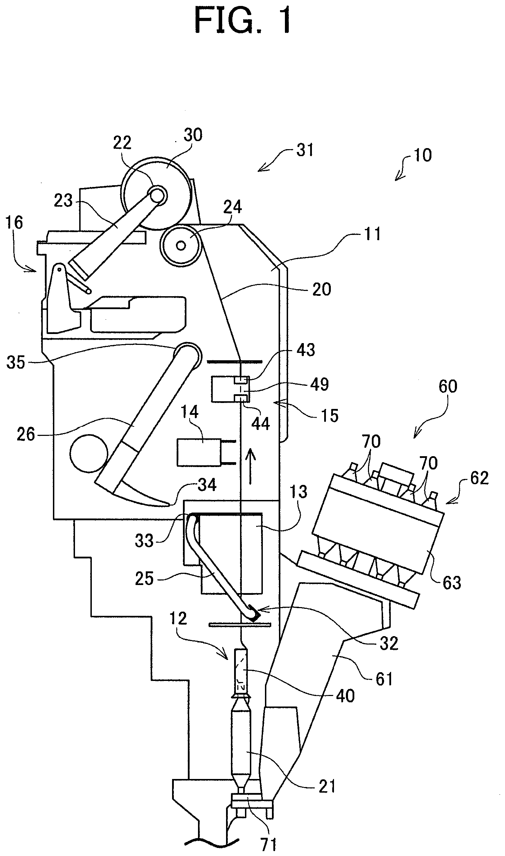

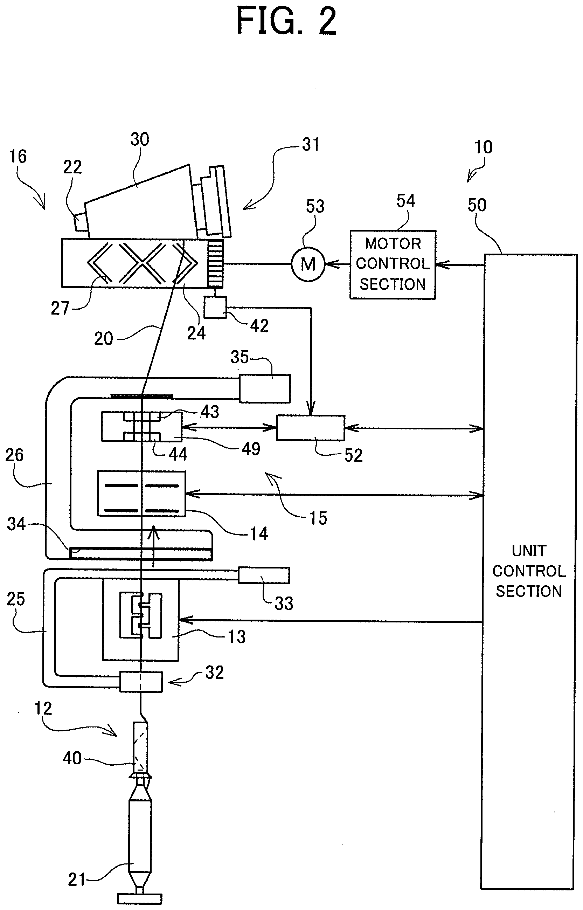

Preferred embodiments of the present invention will be described below with reference to the drawings. A winder unit 10 illustrated in FIG. 1 and FIG. 2 unwinds a spun yarn 20 from a yarn supplying bobbin 21 and winds the spun yarn 20 around a winding bobbin 22 while traversing the spun yarn 20 to form a package 30 of a prescribed length and a prescribed form. An automatic winder (yarn winding device) of the present embodiment includes a plurality of winder units 10 arranged in a line, and a main control device (not illustrated) arranged at one end in a direction in which the winder units 10 are arranged.

Each of the winder units 10 includes a unit frame 11 (FIG. 1) arranged on a left or right side in front view, and a winding unit main body 16 arranged at a side of the unit frame 11. The winding unit main body 16 includes a magazine-type supplying device 60, a winding section 31, and a supplying bobbin holding section 71.

As illustrated in FIG. 1, the magazine-type supplying device 60 includes a magazine holding section 61 and a bobbin accommodating device 62. The magazine holding section 61 extends obliquely upward from a lower part of the winder unit 10 at a front surface side of the winder unit 10. The bobbin accommodating device 62 is attached to a distal end of the magazine holding section 61. The bobbin accommodating device 62 includes a magazine can 63, where a plurality of accommodation holes are formed. The supply bobbin 70 can be set in each of the accommodation holes in a tilted posture. The magazine can 63 can be intermittently driven, rotated, and fed by a motor (not illustrated). The magazine can 63 can drop the supply bobbin 70 one at a time to a bobbin supply path (not illustrated) of the magazine holding section 61 by the intermittent drive and a control valve (not illustrated) of the magazine can 63. The supply bobbin 70 supplied to the bobbin supply path is guided to the supplying bobbin holding section 71 in a tilted posture.

The supplying bobbin holding section 71 includes a turning device (not illustrated) to turn the supply bobbin 70 from the tilted posture to a substantially upright posture after receiving the supply bobbin 70 from the bobbin supply path. The supplying bobbin holding section 71 thus can hold the supplied yarn supplying bobbin 21 in the substantially upright posture. In place of the magazine-type supplying device 60 illustrated in FIG. 1, a transport conveyor (not illustrated) arranged at a lower part of the automatic winder may be used to supply the yarn supplying bobbin 21 from a yarn supplying bobbin supplying section (not illustrated) to the supplying bobbin holding section 71 of each winder unit 10.

The winding section 31 winds the yarn, which has been unwound from the yarn supplying bobbin 21, around the winding bobbin 22 to form the package 30. Specifically, the winding section 31 includes a cradle 23 and a winding drum 24. The cradle 23 can hold the winding bobbin 22. The winding drum 24 traverses the spun yarn 20 and drives the winding bobbin 22. The cradle 23 can swing in a direction of approaching or separating with respect to the winding drum 24. The package 30 is thus brought into contact with or separated from the winding drum 24. As illustrated in FIG. 2, a spiral traverse groove 27 is formed on an outer peripheral surface of the winding drum 24. The spun yarn 20 is traversed by the traverse groove 27.

The winding bobbin 22 is rotated by driving and rotating the winding drum 24. The spun yarn 20 is wound around the rotating winding bobbin 22 while being traversed by the traverse groove 27. As illustrated in FIG. 2, the winding drum 24 is coupled to an output shaft of a drum drive motor 53, and an operation of the drum drive motor 53 is controlled by a motor control section 54. The motor control section 54 performs control to operate and stop the drum drive motor 53 in response to a control signal from a unit control section (control section) 50.

A rotation sensor 42 is attached to the winding drum 24, and the rotation sensor 42 is electrically connected to an analyzer 52 or the like arranged in a clearer 15, to be described later. The rotation sensor 42 is configured as a rotary encoder, for example, and transmits a pulse signal to the analyzer 52 every time the winding drum 24 rotates by a prescribed angle. The pulse signal output by the rotation sensor 42 is referred to as a rotation pulse signal.

The winding unit main body 16 has a configuration in which an unwinding assisting device 12, a tension applying device 13, a yarn splicing device 14, a clearer head 49 of the clearer (yarn travelling information acquiring device) 15 are arranged in this order from the yarn supplying bobbin 21 side on a yarn travelling path between the yarn supplying bobbin 21 and the winding drum 24.

The unwinding assisting device 12 assists the unwinding of the spun yarn 20 from the yarn supplying bobbin 21 by lowering a regulating member 40 covering a core tube accompanying unwinding of the spun yarn 20 from the yarn supplying bobbin 21. The regulating member 40 makes contact with a balloon that is formed at an upper part of the yarn supplying bobbin 21 when the spun yarn 20 unwound from the yarn supplying bobbin 21 is swung around, thus applying an appropriate tension to the balloon and assisting unwinding of the spun yarn 20.

The tension applying device 13 applies a prescribed tension on the travelling spun yarn 20. As the tension applying device 13, for example, a gate-type tension applying device may be used in which movable comb teeth are arranged with respect to fixed comb teeth. The movable comb teeth are swung by a rotary solenoid so that the movable comb teeth are engaged with or released from the fixed comb teeth. The tension applying device 13 applies constant tension to the spun yarn 20 that is being wound, thereby improving quality of the package 30. Other than the gate-type, a disc-type tension applying device or the like may be adopted as the tension applying device 13.

The clearer 15 detects defects by detecting thickness unevenness of the spun yarn 20 with an appropriate sensor. Specifically, the clearer 15 includes the clearer head 49 and the analyzer 52 (FIG. 2). Two yarn unevenness detecting sensors 43 and 44 are arranged in the clearer head 49. The clearer 15 can detect yarn defects such as slub by processing signals from the yarn unevenness detecting sensors 43 and 44 by the analyzer 52. A cutter (not illustrated) for immediately cutting the spun yarn 20 when the clearer 15 detects a yarn defect is arranged in proximity to the clearer head 49.

The clearer 15 may also function as a yarn travelling information acquiring device for acquiring travelling information of the spun yarn 20. The travelling information of the spun yarn 20 is information indicating a state of the travelling spun yarn 20. The configuration of acquiring the travelling information of the spun yarn 20 by the clearer 15 will be described later.

The yarn splicing device 14 splices lower yarn from the yarn supplying bobbin 21 and upper yarn from the package 30 after the clearer 15 detects a yarn defect and cuts the yarn, after yarn breakage during unwinding of the spun yarn 20 from the yarn supplying bobbin 21, and the like. The yarn splicing device 14 may be a mechanical-type or a type that uses fluid such as compressed air.

A lower yarn guiding pipe 25 for catching and guiding the lower yarn from the yarn supplying bobbin 21 is arranged upstream of the yarn splicing device 14. An upper yarn guiding pipe 26 for catching and guiding the upper yarn from the package 30 is arranged downstream of the yarn splicing device 14. A suction port 32 is formed at a tip end of the lower yarn guiding pipe 25. A suction mouth 34 is arranged at a tip end of the upper yarn guiding pipe 26. The lower yarn guiding pipe 25 and the upper yarn guiding pipe 26 are respectively connected to an appropriate negative pressure source to act a suction flow at the suction port 32 and the suction mouth 34.

At the time of yarn cut or yarn breakage, the suction port 32 of the lower yarn guiding pipe 25 catches the lower yarn at a position illustrated in FIG. 1 and FIG. 2, and is thereafter swung upward around a shaft 33 to guide the lower yarn to the yarn splicing device 14. Almost at the same time, the upper yarn guiding pipe 26 is swung upward around a shaft 35 from the illustrated position to catch, with the suction mouth 34, the upper yarn unwound from the package 30 that is reversely rotated by the drum drive motor 53. Subsequently, the upper yarn guiding pipe 26 is swung downward around the shaft 35 to guide the upper yarn to the yarn splicing device 14. The yarn splicing device 14 then carries out yarn splicing of the lower yarn and the upper yarn.

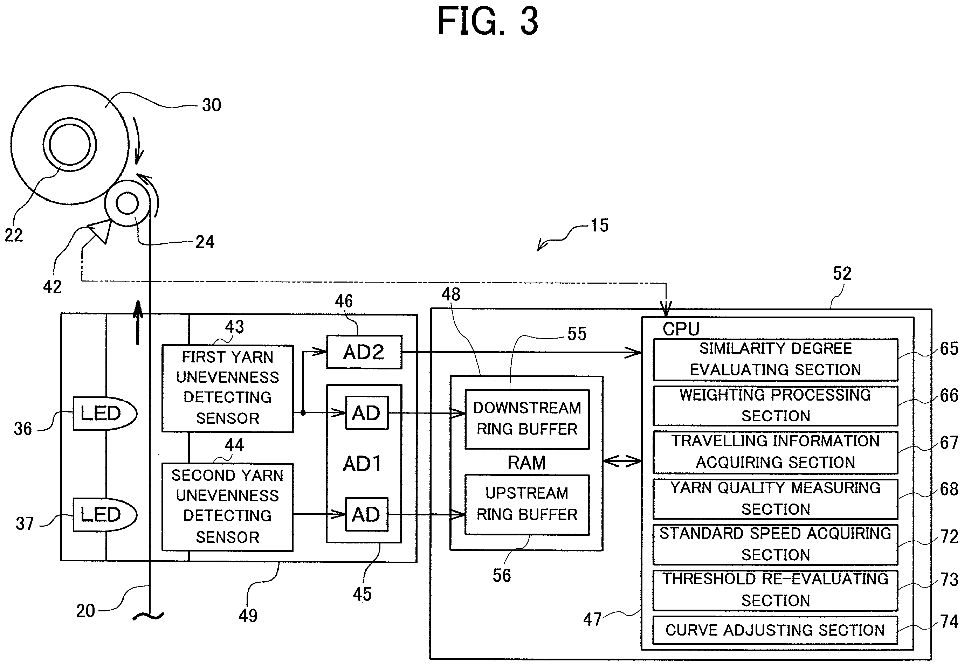

Next, the clearer 15 will be described in detail with reference to FIG. 3.

As illustrated in FIG. 3, the clearer head 49 includes two yarn unevenness detecting sensors 43 and 44, and two Analog-to-Digital (A/D) converters 45 and 46. The analyzer 52 is configured by hardware such as a Central Processing Unit (CPU) 47, a Random Access Memory (RAM) 48, and a Read Only Memory (ROM) (not illustrated), and software such as program stored in the ROM. The hardware and the software cooperate to cause the CPU 47 to function as a similarity degree evaluating section 65, a weighting processing section 66, a travelling information acquiring section 67, a yarn quality measuring section 68, a standard speed acquiring section 72, a threshold re-evaluating section 73, a curve adjusting section 74, and the like. The pulse signals from the rotation sensor 42 are input to the analyzer 52.

A first yarn unevenness detecting sensor (first detecting section) 43 and a second yarn unevenness detecting sensor (second detecting section) 44 are arranged at a prescribed interval in a yarn travelling direction. The first yarn unevenness detecting sensor 43 is arranged downstream and the second yarn unevenness detecting sensor 44 is arranged upstream. In the present embodiment, the yarn unevenness detecting sensors 43 and 44 are adapted to detect thickness unevenness of the spun yarn 20. Specifically, the yarn unevenness detecting sensors 43 and 44 are configured as optical sensors. Light Emitting Diodes (LED) 36 and 37 are arranged as light sources on an opposite side of the yarn unevenness detecting sensors 43 and 44 with a yarn path of the spun yarn 20 therebetween. The yarn unevenness detecting sensors 43 and 44 detect a light receiving amount from the LEDs 36 and 37. Since the light receiving amount of the yarn unevenness detecting sensors 43 and 44 changes when the thickness of the travelling spun yarn 20 changes, the clearer 15 can detect the thickness unevenness of the spun yarn 20. The output signals (yarn thickness unevenness signals) from the yarn unevenness detecting sensors 43 and 44 are Analog-to-Digital (A/D) converted, and then output to the analyzer 52.

The CPU 47 arranged in the analyzer 52 monitors the A/D converted yarn thickness unevenness signal and measures the quality of the spun yarn 20. For example, because the thickness of the spun yarn 20 is found to be abnormal at an area where the quality of the spun yarn 20 has a problem, the defect of the spun yarn 20 can be detected by detecting the abnormality in the thickness of the spun yarn 20 by the CPU 47. The CPU 47 thus can function as the yarn quality measuring section 68 since the quality of the spun yarn 20 is measured by the CPU 47.

The yarn supplying bobbin 21 normally has a yarn spun by a ring spinning machine. Slight thickness unevenness may periodically occur in such a yarn. The cause of the periodic yarn thickness unevenness may include core shift of a draft roller that drafts a sliver in the ring spinning machine. The periodic thickness unevenness in a spinning process causes moire to be generated in a woven cloth in the subsequent weaving process. The CPU 47 serving as the yarn quality measuring section 68 performs a Fast Fourier Transform (FFT) calculation of the yarn thickness unevenness signal to detect the periodic thickness unevenness of the spun yarn 20. In order to accurately perform the FFT calculation, the number of waveform data per unit length of the spun yarn 20 is required to be accurately made constant when sampling the yarn thickness unevenness signal in the A/D converter.

The CPU 47 of the present embodiment acquires information relating to a travelling state of the spun yarn 20, and changes a sampling period (cycle) of the second A/D converter 46 according to the travelling state. Specifically, the CPU 47 generates a pulse signal each time the spun yarn 20 travels a specific length (e.g., 1 mm), and transmits the pulse signal to the second A/D converter 46. This pulse signal is referred to as a fixed yarn length pulse signal. Based on this fixed yarn length pulse signal, the second A/D converter 46 samples the analog signals from the first yarn unevenness detecting sensor 43, and converts the analog signals into digital signals. Accordingly, since the number of data per unit length of the spun yarn 20 can be accurately maintained constant, the FFT calculation can be accurately performed in the CPU 47 and the periodic thickness unevenness can be reliably detected. By accurately maintaining the number of data per unit length of the spun yarn 20 constant, the CPU 47 can accurately perform an evaluation of the length of the thickness unevenness of the spun yarn 20 even with a sporadic yarn defect without periodicity, and the detection accuracy of the analyzer 52 can be improved. Since the fixed yarn length pulse signal is information relating to the travelling state of the yarn 20, the fixed yarn length pulse signal can be referred to as one type of yarn travelling information. As described above, since the CPU 47 acquires the yarn travelling information, the CPU 47 may be referred to be functioning as the travelling information acquiring section 67.

Next, the configuration of acquiring the fixed yarn length pulse signal will be described.

The clearer 15 of the present embodiment includes the first A/D converter 45 apart from the second A/D converter 46.

The first A/D converter 45 is an A/D converter which performs sampling of the yarn thickness unevenness signal in order to acquire the fixed yarn length pulse signal by the CPU 47. Specifically, the first A/D converter 45 samples the analog signals from the two yarn unevenness detecting sensors 43 and 44, and converts the analog signals to digital signals. The obtained digital signals are input to the analyzer 52. The CPU 47 arranged in the analyzer 52 functions as the similarity degree evaluating section 65, the weighting processing section 66, the travelling information acquiring section 67, and the like to detect a travelling speed of the spun yarn 20 using the input digital signals. The travelling speed of the yarn is also information relating to the travelling state of the yarn, and thus can be referred to as one type of yarn travelling information. The CPU 47 may be referred to be functioning as the travelling information acquiring section 67.

If the travelling speed of the spun yarn 20 is obtained, the travelled length of the spun yarn 20 within a prescribed period of time can be detected in accordance with the travelling speed. The CPU 47 generates and acquires the fixed yarn length pulse signal in accordance with the travelling speed of the spun yarn 20, and transmits the fixed yarn length pulse signal to the second A/D converter 46. According to the above configuration, the yarn thickness unevenness signal can be sampled for every fixed yarn length of the spun yarn 20 in the second A/D converter 46.

Next, a method of acquiring the travelling speed (yarn travelling information) of the spun yarn 20 by the clearer 15 will be described in detail.

First, in the first A/D converter 45, the analog waveforms output from the yarn unevenness detecting sensors 43 and 44 are sampled. A sampling frequency fs1 at this time is changed as needed in proportion to a rotation speed of the winding drum 24. Accordingly, when the signal waveforms of the yarn unevenness detecting sensors 43 and 44 are sampled by the first A/D converter 45, the number of data acquired per unit length of the spun yarn 20 thus can be maintained substantially constant. Therefore, a calculation load of the CPU 47 can be reduced than when the sampling frequency is fixed.

This will be specifically described below. As described above, the rotation sensor 42 outputs the rotation pulse signal every time the winding drum 24 rotates a prescribed angle. Therefore, the number of rotation pulse signals output per unit time is proportional to the rotation speed of the winding drum 24. The CPU 47 of the analyzer 52 acquires the rotational information of the winding drum 24 in accordance with the rotation pulse signal received from the rotation sensor 42. The rotational information of the winding drum 24 is information relating to the rotation speed of the winding drum 24, and may be a peripheral speed of the winding drum 24, an angular speed of the winding drum 24. The rotational information of the winding drum 24 may also be the number of rotation pulse signals output per unit time. That is, the information relating to the rotation speed of the winding drum 24 just needs to be acquired in some form as the rotational information of the winding drum 24 in accordance with the rotation pulse signal.

The CPU 47 obtains the sampling frequency fs1 through a process of multiplying a prescribed coefficient to the rotational information of the winding drum 24 obtained in the above manner, and sets the obtained sampling frequency fs1 in the first A/D converter 45. With such a configuration, the sampling frequency fs1 of the first A/D converter 45 may be changed in proportion to the rotation speed of the winding drum 24.

The analyzer 52 has a storage range configured as a ring buffer (downstream ring buffer 55 and upstream ring buffer 56) on the RAM 48 to temporarily carry the waveform data input from the first A/D converter 45. Specifically, data obtained by sampling the output signal (first yarn thickness unevenness signal) from the first yarn unevenness detecting sensor 43 is accumulated in the downstream ring buffer 55. The data obtained by sampling the output signal (second yarn thickness unevenness signal) from the second yarn unevenness detecting sensor 44 is accumulated in the upstream ring buffer 56. Although the size of the downstream ring buffer 55 and the upstream ring buffer 56 is not particularly limited, the downstream ring buffer 55 and the upstream ring buffer 56 can respectively carry 128 data in the present embodiment.

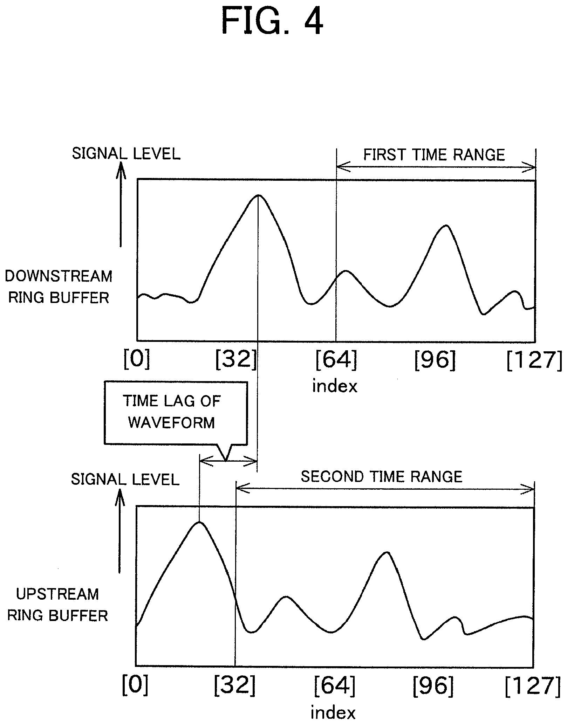

FIG. 4 graphically illustrates data series (waveform data series) accumulated in the ring buffers 55 and 56. In the graph of FIG. 4, a vertical axis represents a signal level indicated by the waveform data, and a horizontal axis represents an index of the ring buffer in which the waveform data is stored. Regarding the index of the horizontal axis of FIG. 4, a smaller value is assigned to older data in the ring buffer. In other words, the index in which the oldest data is stored in the ring buffer is index [0], and the index in which the most recent data is stored is index [127]. Therefore, the horizontal axis of FIG. 4 may also be considered as a time axis.

If the tension applied on the spun yarn 20 is constant, stretching of the spun yarn 20 at the measurement positions of the first yarn unevenness detecting sensor 43 and the second yarn unevenness detecting sensor 44 is to be the same. Thus, the same waveform is assumed to be observed in the two yarn unevenness detecting sensors 43 and 44. However, since the first yarn unevenness detecting sensor 43 is arranged downstream of the second yarn unevenness detecting sensor 44 in the yarn travelling direction, the waveform of the signal output from the first yarn unevenness detecting sensor 43 (first yarn thickness unevenness signal) has a time delay with respect to the waveform of the signal output from the second yarn unevenness detecting sensor 44 (second yarn thickness unevenness signal). This delay causes the waveform data series stored in the upstream ring buffer 56 to shift by $\Delta T$ in a past direction (left direction of FIG. 4) in the time axis compared to the waveform data series stored in the downstream ring buffer 55. Provided that the time delay is $\Delta T$, and a distance between the detection positions of the two yarn unevenness detecting sensors 43 and 44 is L, a yarn speed V can be obtained by the following equation.

$$V = L / \Delta T \qquad \ldots (1)$$

Therefore, the analyzer 52 can calculate the travelling speed of the spun yarn 20 by detecting the time delay $\Delta T$ of the waveform of the first yarn thickness unevenness signal with respect to the waveform of the second yarn thickness unevenness signal.

In the present embodiment, the CPU 47 compares the waveform of the first yarn thickness unevenness signal (waveform data series accumulated in the downstream ring buffer 55) and the waveform of the second yarn thickness unevenness signal (waveform data series accumulated in the upstream ring buffer 56) to obtain the time delay $\Delta T$. Since a certain duration of time is assumed when the "waveform" is referred, only the single waveform data sampled at a certain instant cannot be referred to as the "waveform". In other words, when referring to comparing the waveforms of the signals, the data series continuously acquired within a certain time range are compared.

The CPU 47 compares the first waveform data series and the second waveform data series. The first waveform data series is the waveform data series continuously acquired within a prescribed first time range among the downstream waveform data accumulated in the downstream ring buffer 55. The second waveform data series is the waveform data series continuously acquired within a prescribed second time range among the waveform data accumulated in the upstream ring buffer 56.

As illustrated in FIG. 4, the first time range is a range from index [64] to index [127] of the ring buffer in the present embodiment. Therefore, the first waveform data series is configured by waveform data of most recent 64 points among the waveform data accumulated in the downstream ring buffer 55. The second time range is a range from index [32] to index [127] of the ring buffer. Therefore, the second waveform data series is configured by waveform data of most recent 96 points among the waveform data accumulated in the upstream ring buffer 56.

Next, the comparison of the waveforms carried out by the CPU 47 will be specifically described. The CPU 47 compares the first waveform data series and the second waveform data series to obtain a similarity degree of the waveform of the first yarn thickness unevenness signal and the waveform of the second yarn thickness unevenness signal. The similarity degree is an index indicating to what extent the two waveforms overlap (to what extent the two waveforms are similar).

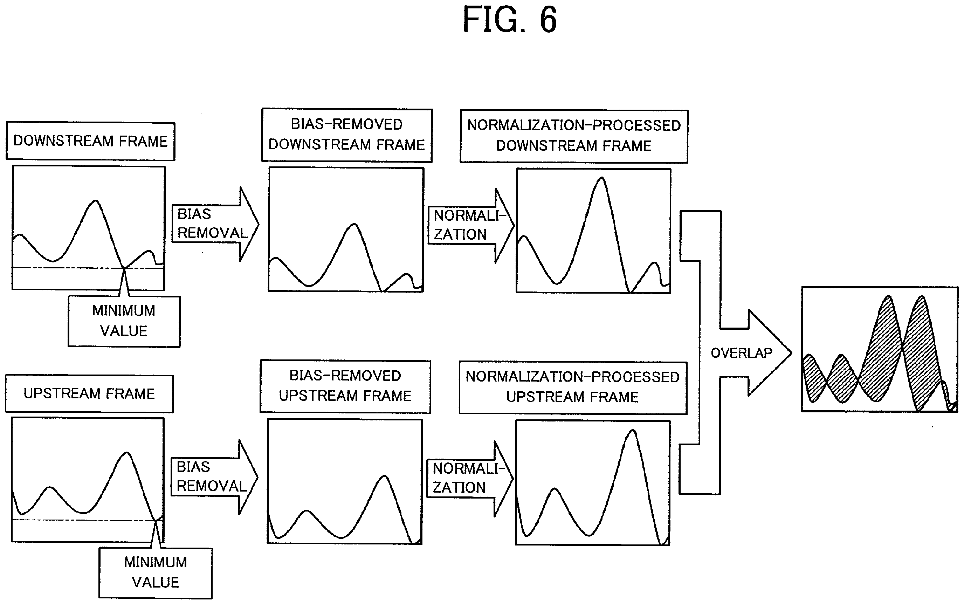

Various methods can be considered as a method of calculating the similarity degree. In the present embodiment, the similarity degree is calculated in the following manner. That is, the two waveforms to be compared are overlapped to acquire an area between the two waveform graphs (portion hatched with diagonal lines in FIG. 6). In this case, the two waveforms do not overlap at all if the two waveforms are completely different, and the area becomes 2. If the two waveforms completely coincide, the area becomes 0. With the above area, the similarity degree can be calculated by the following equation.

$$\text{Similarity degree} = 1 - (\text{area between two waveforms}) \div 2$$

$$\ldots (2)$$

That is, according to the definition of similarity degree, the two waveforms are more different as the similarity degree is closer to 0, and the two waveforms are more similar as the similarity degree is closer to 1.

Meanwhile, as described above, since the second waveform data series is configured by waveform data of 96 points and the first waveform data series is configured by waveform data of 64 points, the range of the second waveform data series is set wider than the range of the first waveform data series. In other words, the second time range is set longer than the first time range in the present embodiment. On the other hand, in order to calculate the similarity degree, the lengths on the time axis of the two waveforms (lengths of waveform data series) to be compared is required to be equal. Thus, when comparing the first waveform data series and the second waveform data series, the CPU 47 extracts the waveform data series having the same length as the first wavelength data series from the second waveform data series, and obtains the similarity degree of the extracted waveform data series and the first waveform data series.

This will be more specifically described below. The CPU 47 prepares an imaginary frame (downstream frame and upstream frame) obtained by imaginarily retrieving the waveform data series acquired within a prescribed time range from the waveform data of the ring buffers 55 and 56. The CPU 47 evaluates the overlapping (similarity degree) of the waveform data of the downstream frame (first imaginary frame) and the waveform data of the upstream frame (second imaginary frame) .

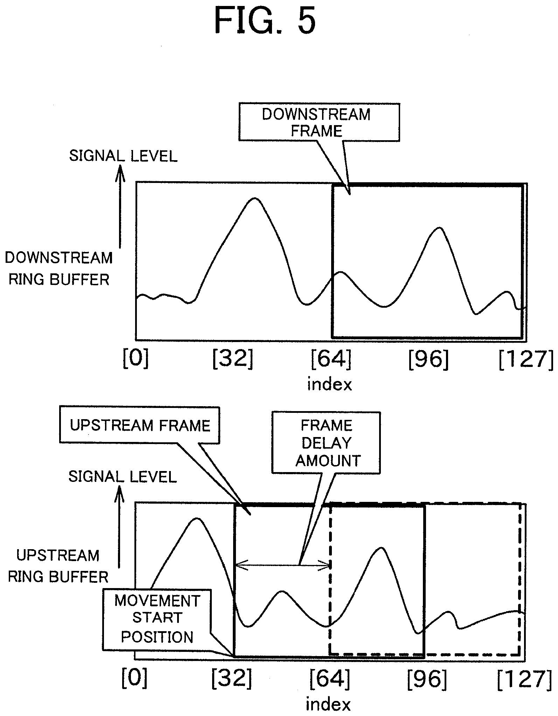

The downstream frame (first imaginary frame) is an imaginary frame for imaginarily retrieving the waveform data series (first waveform data series) continuously acquired in the first time range from the waveform data accumulated in the downstream ring buffer 55. Specifically, as illustrated in FIG. 5, the downstream frame is set to include data of most recent 64 points (waveform data in a range from index [64] to index [127] of downstream ring buffer) among the waveform data stored in the downstream ring buffer 55. In the following description, the index of the oldest data of the waveform data included in the imaginary frame is expressed as a head position of the imaginary frame. In the case of the downstream frame, the head position is index [64] .

The upstream frame (second imaginary frame) is an imaginary frame for imaginarily retrieving the waveform data series (waveform data of 64 points) in the time range of the same length as the first time range from the waveform data series (second waveform data series) of the upstream ring buffer 56 acquired in the second time range. In other words, the upstream frame is set to store data of 64 continuous points among the waveform data of the range from index [32] to index [127] (second time range) of the upstream ring buffer 56.

The range of the second waveform data series is wider than the first waveform data series by the waveform data of 32 points towards the past direction on the time axis. The head position of the upstream frame thus can be set to a position shifted within 32 points in the past direction than the head position of the downstream frame. The difference in index between the head position of the downstream frame and the head position of the upstream frame is referred to as "frame delay amount" or simply "delay amount".

After the upstream frame and the downstream frame are set in the above manner, the CPU 47 obtains the similarity degree which is the index on what extent the waveform included in the upstream frame and the waveform included in the downstream frame are overlapping. However, since the output signals of the yarn unevenness detecting sensors 43 and 44 contain bias components, and sensitivity of the yarn unevenness detecting sensors 43 and 44 varies, the two waveforms may not correctly overlap. The CPU 47 thus performs processing of bias component removal and normalization on the waveform data of the upstream frame and the downstream frame. As illustrated in FIG. 6, the bias component removal is a processing of searching for a minimum value of the data in the calculation frame and subtracting the minimum value from the value of each data. Normalization is a processing of dividing the value of each data with a total value of data in the calculation frame. The area of the graph of the waveform in the calculation frame is thereby normalized to 1. As described above, since the bias component removal and the normalization of the waveform are carried out on the upstream waveform data and the downstream waveform data respectively, variation in bias component for each of the yarn unevenness detecting sensors 43 and 44, as well as the difference in sensitivity for each of the yarn unevenness detecting sensors 43 and 44 can be absorbed.

After the processing of bias component removal and normalization are performed as described above, the CPU 47 executes a similarity degree evaluation processing for obtaining the similarity degree between the data series of the downstream frame (waveform of first yarn thickness unevenness signal) and the data series of the upstream frame (waveform of second yarn thickness unevenness signal). Since the CPU 47 evaluates the similarity degree of the two waveforms, the CPU 47 may be referred to be functioning as the similarity degree evaluating section 65.

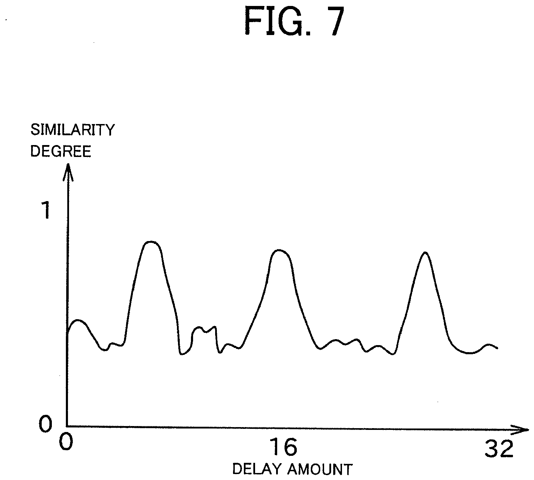

As described above, the head position of the upstream frame can be set to a position shifted within 32 points in the past direction than the head position of the downstream frame. That is, the frame delay amount can be changed in the range from 0 to 32. The similarity degree evaluating section 65 repeatedly executes the similarity degree evaluation processing while changing the frame delay amount within the above range. In other words, the similarity degree evaluating section 65 selects a plurality of positions on the time axis of the upstream frame in the second time range, and evaluates the similarity degree with respect to each of the plurality of positions. The similarity degree evaluating section 65 thereby acquires a plurality of similarity degrees. Thus, by setting the second time range to be longer than the first time range, the similarity degree evaluation can be carried out for a plurality of times while moving the upstream frame within the second time range, and the CPU 47 can acquire a plurality of similarity degrees. As a result of acquiring a plurality of similarity degrees for the frame delay amount, the CPU 47 can obtain a relationship between the delay amount and the similarity degree, as illustrated in FIG. 7, for example.

When the similarity degree becomes maximum (when similarity degree indicates a peak), the waveform of the upstream frame and the waveform of the downstream frame are most satisfactorily overlapped. In other words, the time delay ∆T has been resolved between the waveform data series of the upstream ring buffer 56 and the waveform data series of the downstream ring buffer 55. Therefore, frame delay amount when the similarity degree is maximum is assumed to correspond to the time delay ∆T of the waveform of the upstream ring buffer and the waveform of the downstream ring buffer. That is, the time delay ∆T of the waveform can be calculated by dividing the delay amount when the similarity degree is maximum by the sampling frequency fs1 of the first A/D converter 45.

$$\Delta T = (\text{delay amount when similarity degree is maximum}) \div fs1$$

$$... (3)$$

The clearer 15 can calculate the travelling speed of the spun yarn 20 by substituting ∆T obtained as described above in the equation (1). In this manner, the clearer 15 can obtain the travelling speed of the spun yarn 20 based on the similarity degree of two waveforms . However, the clearer 15 of the present embodiment does not calculate the travelling speed of the spun yarn 20 using the similarity degree as is as described above, and calculates the travelling speed of the spun yarn 20 using the weighted similarity degree, as hereinafter described.

In the present embodiment, a plurality of similarity degrees are obtained by moving the upstream frame on the time axis as described above, but instead, the downstream frame may be moved on the time axis. However, if the upstream frame is moved on the time axis as in the present embodiment, the downstream frame can have the position on the time axis fixed so as to include the most recent waveform data among the waveform data included in the downstream ring buffer 55 (in FIG. 5, downstream frame can be fixed at a rightmost position). The clearer 15 thus can calculate the time delay ∆T using the most recent yarn thickness unevenness signal on the downstream side, and can obtain the travelling speed of the spun yarn 20 in real time.

Meanwhile, since a similar state may continue in the thickness unevenness of the travelling spun yarn 20, a similar waveform may also continue in the signals output from the yarn unevenness detecting sensors 43 and 44. In this case, since the upstream waveform and the downstream waveform overlap at a plurality of positions, as illustrated in FIG. 7, a plurality of delay amounts indicating a peak (maximum value) having a large similarity degree exist within the movement range of the upstream frame. If a plurality of peaks having a large similarity degree exist within the movement range of the upstream frame, the delay amount of which peak is to be used for the calculation of the equation (3) becomes confusing and the yarn travelling speed may be calculated using a wrong delay amount.

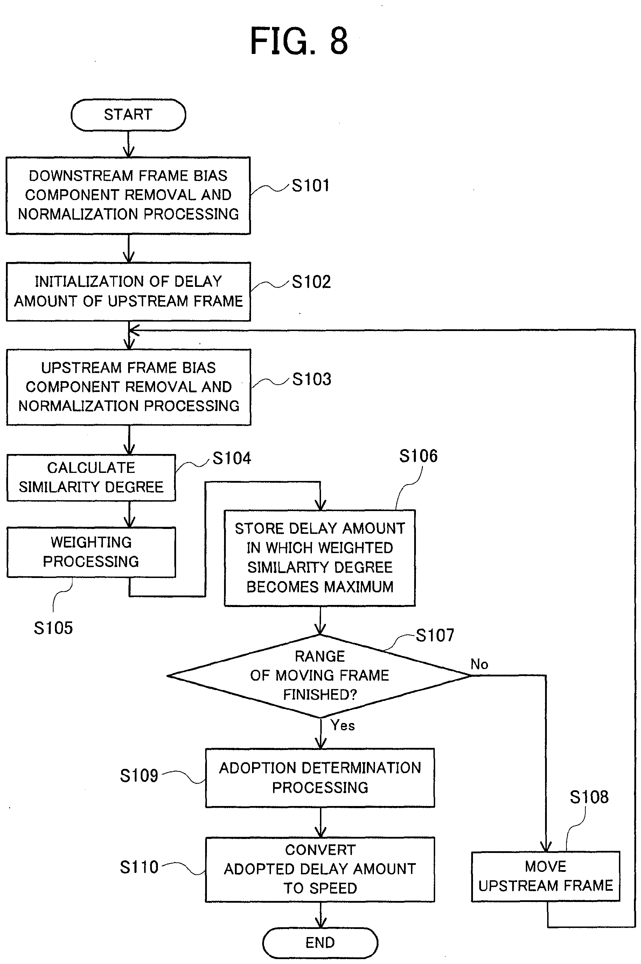

Therefore, in the present embodiment, weighting is performed on the similarity degree to resolve the confusion of the peak having a similarity degree. The yarn travelling speed acquiring processing executed by the CPU 47 in the present embodiment will be described below with reference to FIG. 8.

The CPU 47 executes the yarn travelling speed acquiring processing illustrated in the flowchart of FIG. 8 every time new data is sampled in the first A/D converter 45 and the new waveform data is added to the ring buffers 55 and 56. When the yarn travelling speed acquiring processing starts, the CPU 47 performs bias component removal and normalization of the waveform of the waveform data in the downstream frame (step S101).

The CPU 47 then performs initialization of the frame delay amount (initialization of the position of the upstream frame) (step S102) . In the present embodiment, the frame delay amount is initialized to 32. The upstream frame is thus set to a position shifted to the past corresponding to the waveform data of 32 points from the downstream frame. Therefore, the upstream frame includes the waveform data in the range from index [32] to index [95] of the upstream ring buffer (see FIG. 5).

After the position of the upstream frame is determined, the CPU 47 performs the bias component removal and the normalization of the waveform on the waveform data in the upstream frame (step S103) .

Next, the CPU 47 performs the similarity degree evaluation processing for obtaining the similarity degree on the waveform data in the upstream frame and the waveform data in the downstream frame (step S104).

The CPU 47 then performs a weighting processing for performing weighting on the similarity degree, and calculating the weighted similarity degree (step S105). Since the weighting processing is carried out in this manner, the CPU 47 may be referred to be functioning as the weighting processing section 66. In the following description, the similarity degree before the weighting is also referred to as "raw similarity degree" if such similarity degree needs to be distinguished from the weighted similarity degree. The above weighting processing is performed by multiplying a weighting factor and the value of the raw similarity degree. That is, provided that the raw similarity degree for delay amount c_index is $S_{c\_index}$, and the weighting factor on the delay amount c_index is $W_{c\_index}$, the weighted similarity degree $S'_{c\_index}$ can be obtained with the following equation.

$$S'_{c\_index} = S_{c\_index} \times W_{c\_index} \qquad \dots \ (4)$$

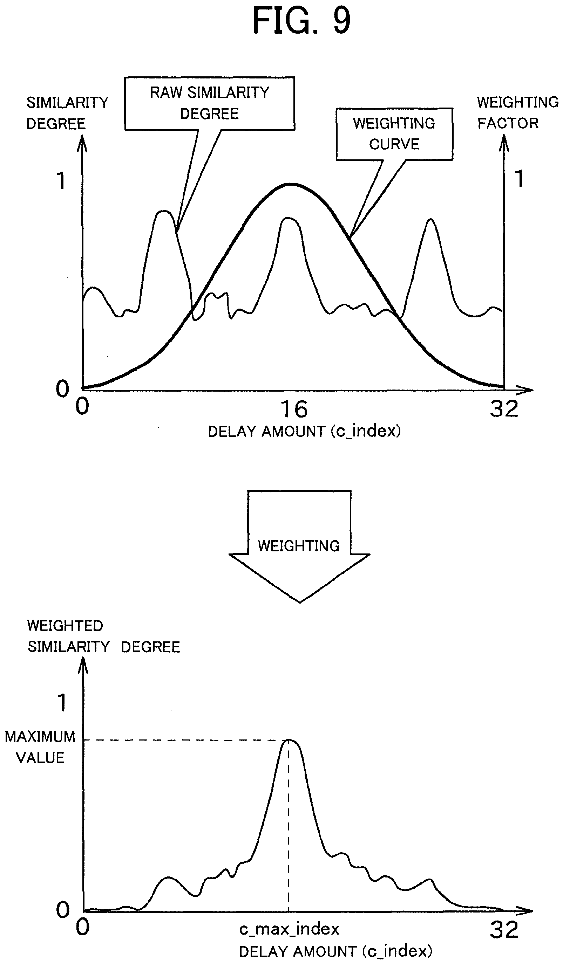

The value of the weighting factor $W_{c\_index}$ for a certain delay amount c_index is determined by a weighting curve that specifies the relationship between the delay amount and the weighting factor. An example of the weighting curve is illustrated in an upper graph of FIG. 9. As illustrated in FIG. 9, the weighting curve is set so that the weighting factor has one maximum value that becomes a peak at the position of a prescribed delay amount c_index, and the value of the weighting factor is set so as to gradually decrease as it becomes distant from the peak. Therefore, by performing the weighting on the similarity degree using the weighting factor specified by the weighting curve, the similarity degree at positions in proximity to the peak of the weighting curve is emphasized, and the other similarity degrees are suppressed. As a result, as illustrated in lower graph of FIG. 9, since the intensity of the unnecessary peaks can be suppressed among the plurality of large peaks included in the raw similarity degree, ambiguity of the peak of the similarity degree can be reduced. A specific setting method of the weighting curve will be described later.

After the weighted similarity degree is newly calculated as described above, the CPU 47 stores the newly calculated weighted similarity degree, the value (raw similarity degree) before the weighing was carried out on the weighted similarity degree, and the delay amount when the weighted similarity degree is calculated (step S106). If the execution of a loop from step S103 to step S108 is for the second time or more, the weighted similarity degree calculated before is already stored at a point of time when step S106 is executed. In this case, the CPU 47 compares the newly calculated weighted similarity degree and the saved weighted similarity degree, only when the newly calculated weighted similarity degree is greater, the CPU 47 overwrites and stores the newly calculated weighted similarity degree, the raw similarity degree, and the delay amount.

The CPU 47 then determines whether or not the movement range of the upstream frame is finished (step S107). In the present embodiment, the upstream frame is moved in the range in which the frame delay amount is from 32 to 0 (i.e., range in which the upstream frame fits within the second time range). If the movement range is not finished, the frame delay amount is reduced by one in step S108 (upstream frame is shifted by one toward right in FIG. 5), and the process returns to step S103. On the other hand, if the movement range is finished, the process proceeds to step S109.

According to the above loop processing, the processing of steps S103 to S108 is repeatedly carried out while shifting the position on the time axis of the upstream frame. Accordingly, since the similarity degree evaluation processing and the weighting processing are performed for a plurality of times in the movement range of the upstream frame (range in which the frame delay amount is from 0 to 32), the CPU 47 can acquire a plurality of similarity degrees (raw similarity degrees) and a plurality of weighted similarity degrees. By repeating the processing of step S106, the CPU 47 can obtain the maximum value of the weighted similarity degree, and the raw similarity degree and the delay amount at the maximum value. In the following description, the maximum value of the weighted similarity degree is referred to as "weighted similarity degree maximum value", the raw similarity degree when the weighted similarity degree becomes maximum is referred to as "maximum value correspondence similarity degree", and the delay amount when the weighted similarity degree becomes maximum is referred to as "maximum value correspondence delay amount". The data stored in step S106 is reset every time a new yarn travelling speed acquiring processing is started. Therefore, the weighted similarity degree maximum value, the maximum value correspondence similarity degree, and the maximum value correspondence delay amount are acquired for every yarn travelling speed acquiring processing.

Even if the weighting is carried out as described in above and the maximum value correspondence delay amount is obtained, reliability of the maximum value correspondence delay amount may be low. That is, the value (raw similarity degree) before carrying out the weighting may be originally a low value. If the value of the raw similarity degree is low, the first yarn thickness unevenness signal and the second yarn thickness unevenness signal are not correctly overlapped. Therefore, if the maximum value correspondence similarity degree is small, the reliability of the maximum value correspondence delay amount at that time is low.

In the present embodiment, in order to prevent the yarn speed V from being calculated based on the above-described maximum value correspondence delay amount with low reliability, the CPU 47 is configured to perform an adoption determination processing (step S109) for determining whether or not to adopt the newly acquired maximum value correspondence delay amount.

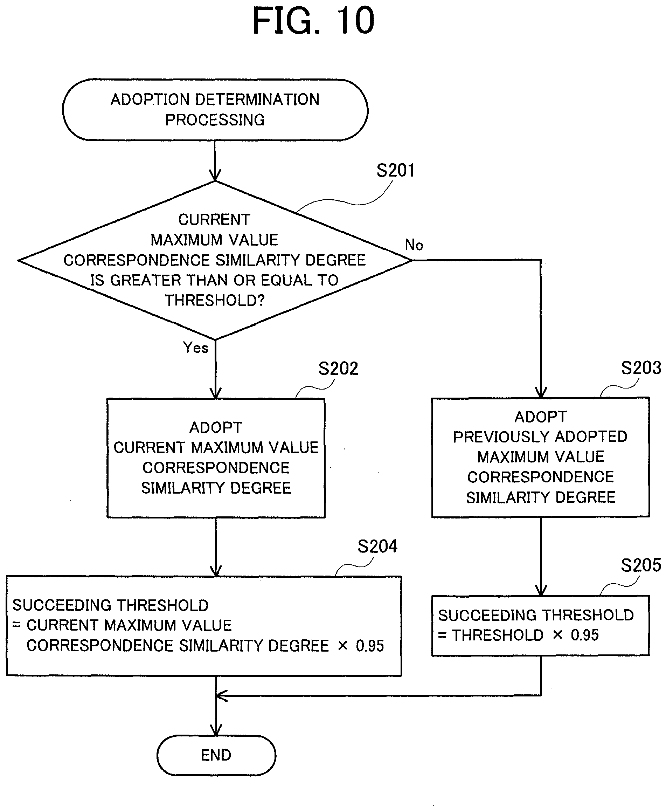

The contents of the adoption determination processing will be specifically described below with reference to the flowchart of FIG. 10. In the following description, the yarn travelling speed acquiring processing currently being executed is referred to as "current yarn travelling speed acquiring process", the weighted similarity degree maximum value, the maximum value correspondence similarity degree, and the maximum value correspondence delay amount obtained in the current yarn travelling speed acquiring processing are respectively referred to as "current weighted similarity degree maximum value", "current maximum value correspondence similarity degree", and "current maximum value correspondence delay amount". The yarn travelling speed acquiring processing executed immediately before the current yarn travelling speed acquiring processing is referred to as "preceding yarn travelling speed acquiring processing".

The maximum value correspondence similarity degree obtained in the preceding yarn travelling speed acquiring processing is referred to as "preceding maximum value correspondence similarity degree".

When the adoption determination processing is started, the CPU 47 determines whether or not the current maximum value correspondence similarity degree is greater than or equal to a prescribed threshold (step S201). The threshold is set at a value in the range from 0 to 1. That is, the waveform of the upstream frame and the waveform of the downstream are more satisfactorily overlapped as the value of the maximum value correspondence similarity degree is closer to 1. Therefore, the reliability of the maximum value correspondence delay amount is higher as the value of the maximum value correspondence similarity degree is closer to 1. On the contrary, the reliability of the maximum value correspondence delay amount is lower as the value of the maximum value correspondence similarity degree is closer to 0. Thus, by determining whether or not the current maximum value correspondence similarity degree is greater than or equal to a prescribed threshold as described above, a determination can be made as to whether or not the current maximum value correspondence delay amount has certain reliability.

If the current maximum value correspondence similarity degree is greater than or equal to the threshold (if the reliability of the current maximum value correspondence delay amount is high), the CPU 47 adopts the current maximum value correspondence delay amount (step S202). On the other hand, if the current maximum value correspondence similarity degree is smaller than the threshold (reliability of the current maximum value correspondence delay amount is low), the CPU 47 adopts the maximum value correspondence delay amount adopted in the previous yarn travelling speed acquiring processing (step S202) . In the following description, the maximum value correspondence delay amount adopted in the previous yarn travelling speed acquiring processing is referred to as "previously adopted maximum value correspondence delay amount". By executing the above processing, the maximum value correspondence similarity degree having low reliability can be prevented from being adopted by the CPU 47.

The CPU 47 then determines a threshold to be used in the adoption determination processing of the yarn travelling speed acquiring processing to be executed the next time (succeeding threshold) . The succeeding threshold is determined in accordance with the current maximum value correspondence similarity degree. Specifically, if a determination is made that the current maximum value correspondence similarity degree is greater than or equal to the threshold (current threshold) in step S201, a value obtained by multiplying a prescribed constant of 1 or smaller (0.95 in the present embodiment) and the current maximum value correspondence similarity degree is adopted as the succeeding threshold (step S204). On the other hand, when a determination is made that the current maximum value correspondence similarity degree is smaller than the threshold (current threshold), a value obtained by multiplying a prescribed constant of 1 or smaller (0.95) and the current threshold is adopted as the succeeding threshold (step S205).

The constant of one or smaller is multiplied with the current maximum value correspondence similarity degree or the current threshold for the following reasons. That is, if the value of the threshold in the determination of step S201 is too large, an opportunity of adopting the current maximum value correspondence delay amount (opportunity to proceed to step S202) is reduced, and the maximum value correspondence delay amount adopted in the past is continuously adopted endlessly. However, since the travelling speed of the spun yarn 20 changes with an elapse of time, the reliability of the past data lowers with time. Therefore, the maximum value correspondence delay amount adopted in the past is not preferable to be continuously adopted endlessly. Accordingly, by multiplying the constant of 1 or smaller to the current threshold or the maximum value correspondence similarity degree to obtain the succeeding threshold as described above, the threshold can be made smaller with an elapse of time, and the maximum value correspondence delay amount adopted in the past can be prevented from being continuously adopted endlessly. As described above, since the processing for reducing the threshold with an elapse of time is carried out, the CPU 47 may also be referred to be functioning as the threshold re-evaluating section 73.

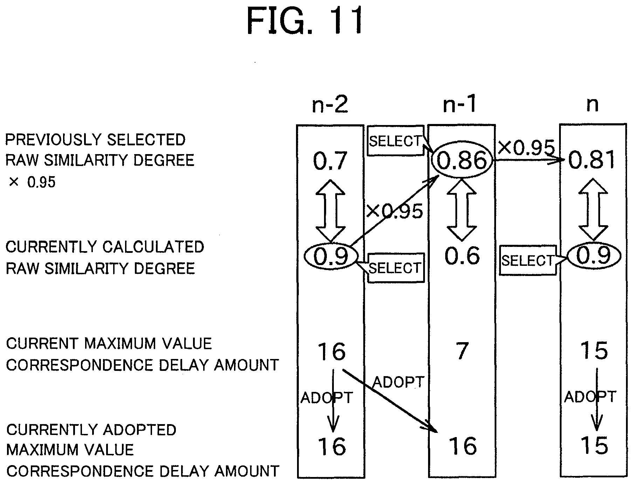

With reference to FIG. 11, the adoption determination processing will be described with a specific example. FIG. 11 illustrates the threshold, the current maximum value correspondence similarity degree, the current maximum value correspondence delay amount, and the maximum value correspondence delay amount adopted this time for n-2th, n-1th, and nth yarn travelling speed acquiring processing.

First, description will be made focusing on the n-2th yarn travelling speed acquiring processing. The n-2th yarn travelling speed acquiring processing illustrates an example in which the reliability of the maximum value correspondence delay amount is high. In this yarn travelling speed acquiring processing, the threshold is 0.7, the current maximum value correspondence similarity degree is 0.9, and the current maximum value correspondence delay amount is 16.

In the n-2th yarn travelling speed acquiring processing, the current maximum value correspondence similarity degree (0.9) is determined to be greater than or equal to the threshold (0.7) (determination of step S201). That is, the reliability of the current maximum value correspondence delay amount is determined to be high, and the CPU 47 adopts the current maximum value correspondence delay amount (16) (step S202). The CPU 47 then adopts a value (0.86) obtained by multiplying a prescribed constant (0.95) and the current maximum value correspondence similarity degree as the threshold in the next processing (n-1th yarn travelling speed acquiring processing) (step S204) .

Next, description will be made focusing on the n-1th yarn travelling speed acquiring processing. The n-1th yarn travelling speed acquiring processing illustrates an example in which the reliability of the maximum value correspondence delay amount is low. In this yarn travelling speed acquiring processing, the threshold is 0.86, the current maximum value correspondence similarity degree is 0.6, and the current maximum value correspondence delay amount is 7.

In the n-1th yarn travelling speed acquiring processing, the current maximum value correspondence similarity degree (0.6) is determined to be smaller than the threshold (0.86) (determination of step S201) . That is, since the reliability of the current maximum value correspondence delay amount is determined to be low, the CPU 47 adopts the previously adopted maximum value correspondence delay amount (16) (step S203). Therefore, if a low similarity degree is calculated (if reliability of the maximum value correspondence delay amount is low), the maximum value correspondence delay amount adopted in the past is adopted, so that the delay amount having high reliability can be used. The CPU 47 then adopts a value (0.81) obtained by multiplying a prescribed constant (0.95) and the threshold (0.86) as the threshold in the next processing (nth yarn travelling speed acquiring processing) (step S205).

Next, description will be made focusing on the nth yarn travelling speed acquiring processing. The nth yarn travelling speed acquiring processing illustrates an example in which the reliability of the maximum value correspondence delay amount again becomes high. In such a yarn travelling speed acquiring processing, the threshold is 0.81, the current maximum value correspondence similarity degree is 0.9, and the current maximum value correspondence delay amount is 15.

In the nth yarn travelling speed acquiring processing, the current maximum value correspondence similarity degree (0.9) is determined to be greater than or equal to the threshold (0.81) (determination of step S201) . That is, the reliability of the current maximum value correspondence delay amount is determined to be high, and the CPU 47 adopts the current maximum value correspondence delay amount (15) (step S202). The CPU 47 then adopts a value obtained by multiplying a prescribed constant (0.95) and the current maximum value correspondence similarity degree as the threshold for the next processing (step S204).

Next, the processing carried out after the adoption determination processing is terminated will be described. After the execution of the adoption determination processing is terminated, the CPU 47 returns to the flow of FIG. 8 and proceeds to step S110.

In step S110, the CPU 47 converts the delay amount adopted in the adoption determination processing of step S109 to the travelling speed of the spun yarn 20. In the following description, the delay amount adopted in step S109 is referred to as "currently adopted maximum value correspondence delay amount". The currently adopted maximum value correspondence delay amount is assumed to correspond to the time delay $\Delta T$ between the waveform data of the upstream ring buffer 56 and the waveform data of the downstream ring buffer 55. Therefore, the currently adopted maximum value correspondence delay amount is divided by the sampling frequency fs1 of the first A/D converter 45 to calculate the time delay $\Delta T$ of the waveform.

$$\Delta T = currently\ adopted\ maximum\ value\ correspondence\ delay\ amount$$
$$\div\ fs1 \qquad \ldots\ (5)$$

The CPU 47 calculates the travelling speed of the spun yarn 20 by substituting $\Delta T$ obtained as described above to the equation (1). By calculating the travelling speed of the spun yarn 20 in accordance with the weighted similarity degree, the CPU 47 can accurately calculate the travelling speed of the spun yarn 20 even if the raw similarity degree includes a plurality of maximum points (peaks). In the present embodiment, as described above, the adoption determination processing is performed for preventing the maximum value correspondence delay amount having low reliability from being adopted. Therefore, even if a low similarity degree is calculated (if reliability of delay amount is low), the CPU 47 can obtain a highly reliable yarn travelling speed.

The CPU 47 changes the sampling period (cycle) of the second A/D converter 46 in accordance with the yarn travelling speed obtained as described above. Specifically, the CPU 47 generates the fixed yarn length pulse signal at a frequency proportional to the yarn travelling speed, and transmits the generated fixed yarn length pulse signal to the second A/D converter 46. The yarn travelling speed is an accurate yarn travelling speed obtained in accordance with the weighted similarity degree. Therefore, by sampling the yarn thickness unevenness signals by the second A/D converter 46 in accordance with the fixed yarn length pulse signal based on the yarn travelling speed, the number of data per unit length of the spun yarn 20 can be accurately made constant.

The yarn travelling speed obtained as described above is transmitted to the unit control section 50. The unit control section 50 transmits the control signal is transmitted to the motor control section 54 according to the travelling speed of the spun yarn 20 transmitted from the clearer 15, and controls the rotation of the winding drum 24. The winder unit 10 thus can perform the winding of the package 30 according to the accurate travelling speed of the spun yarn 20. The unit control section 50 can calculate a total length of the spun yarn 20 wound into the package 30 by integrating the travelling speed of the spun yarn 20 by time. Therefore, for example, when the winding of the spun yarn 20 of a prescribed length is finished, the winder unit 10 can terminate the winding of the spun yarn 20 and have a fully-sound the package.

The winder unit 10 thus can make the length of the spun yarn 20 to be wound to the respective package 30 to be uniform, so that the package 30 of uniform length can be produced.

In the above description, although the CPU 47 has been described to calculate the travelling speed of the spun yarn 20, the yarn travelling information is not necessarily acquired in the form of speed. For example, if the spun yarn 20 moved 2 cm in one second and 3 cm in the next second, the CPU 47 merely needs to acquire the information "moved total of 5 cm in two seconds", and may not necessarily need to acquire information in the form of speed such as "2.5 cm per second". The information of "length the yarn moved per unit time" is also information relating to the travelling state of the spun yarn 20, and hence is one type of yarn travelling information.

Next, the method of determining the weighting curve will be described. In the present embodiment, the weighting curve is set by synthesizing a history weighting curve and a standard speed weighting curve.

First, the history weighting curve will be described. The history weighting curve is set so that the weighting factor becomes large in proximity to the delay amount of when the weighted similarity degree became maximum in the preceding yarn travelling speed acquiring processing (preceding maximum value correspondence delay amount).

That is, since the travelling speed of the spun yarn 20 continuously changes, the yarn travelling speed acquired in the current yarn travelling speed acquiring processing is assumed to be not significantly different from the yarn travelling speed acquired in the preceding yarn travelling speed acquiring processing. Therefore, the maximum value correspondence delay amount in the current yarn travelling speed acquiring processing has a high probability of being in proximity to the maximum value correspondence delay amount in the preceding yarn travelling speed acquiring processing. In other words, the peak of the raw similarity degree that appears at a position away from the preceding maximum value correspondence delay amount has a high possibility of being a fake peak that does not correspond to the travelling speed of the spun yarn 20. The weighting factor is preferably reduced to lower degree of importance with respect to the raw similarity degree at the position away from the preceding maximum value correspondence delay amount.

More specifically, the history weighting curve is defined with the following equation specifying a relationship of a weighting factor $W_P$ of the history weight, and a frame delay amount c_index.

$$W_P = \exp\ (-(p\_max\_index - c\_index)^2 \div w) \qquad \ldots(6)$$

Here, p_max_index is the preceding maximum value correspondence delay amount, and w is a constant that can be set by the user.

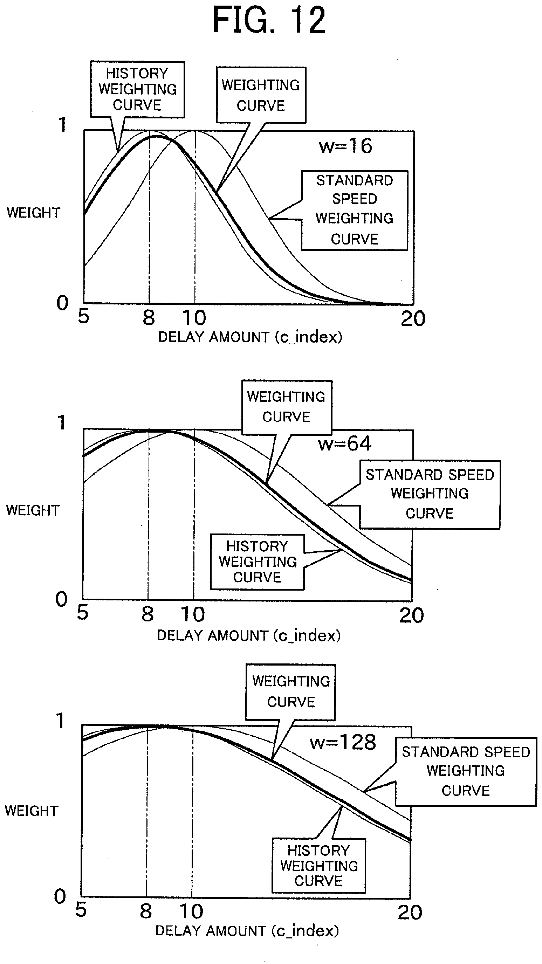

FIG. 12 illustrates the history weighting curve when p_max_index = 8. As illustrated in FIG. 12, the history weighting curve illustrates a peak (maximum value) at c_index = 8. That is, the history weighting curve has a maximum point corresponding to the time delay amount corresponding to the preceding weighted similarity degree maximum value (preceding maximum value correspondence delay amount). By performing the weighting in accordance with the history weighting curve, the similarity degree in proximity to the preceding maximum value correspondence delay amount p_max_index can be made large, and the similarity degree away from the preceding maximum value correspondence delay amount p_max_index can be made small. Therefore, also in the current yarn travelling speed acquiring processing, the CPU 47 can obtain the yarn travelling speed that is not significantly different from the yarn travelling speed acquired in the preceding yarn travelling speed acquiring processing.

Next, the standard speed weighting curve will be described. The standard speed weighting curve is set so that the weighting factor becomes large in proximity to the delay amount corresponding to the standard speed. In the following description, the delay amount corresponding to the standard speed is referred to as standard delay amount.

That is, the travelling speed of the spun yarn 20 is assumed to change around a certain standard speed (average speed) and does not greatly deviate from this standard speed. Therefore, the time delay $\Delta T$ of the waveform data of the upstream ring buffer 56 with respect to the waveform data of the downstream ring buffer 55 is assumed to change in proximity to a delay corresponding to the standard speed. In other words, the peak of the raw similarity degree that appears at a position away from the standard delay amount has a high possibility of being a fake peak that does not correspond to the travelling speed of the spun yarn 20. Thus, the weighting factor is preferably reduced to lower degree of importance with respect to the raw similarity degree at the position away from the standard delay amount.

More specifically, the standard speed weighting curve is defined with the following equation specifying the relationship of value $W_A$ of the standard speed weight and the frame delay amount c_index.

$$W_A = \exp\ (-(\text{offset} - c\_index)^2 \div w) \qquad \ldots\ (7)$$

Here, offset is the standard delay amount, and w is a constant that can be set by the user.

FIG. 12 illustrates a standard speed weighting curve when offset = 10. As illustrated in FIG. 12, the standard speed weighting curve has a peak at c_index = 10. That is, the standard speed weighting curve has a maximum point at the time delay amount corresponding to the standard speed. By performing weighting on the similarity degree in accordance with the standard speed weighting curve, the weight with respect to the similarity degree can be made large in proximity to the standard delay amount offset, and the similarity degree away from the standard delay amount off set can be made small. Therefore, the analyzer 52 can obtain the yarn travelling speed that is not significantly different from the standard speed.

In the present embodiment, the analyzer 52 obtains the standard speed using the drum rotational information. That is, since the spun yarn 20 is wound around the winding bobbin 22 driven by the rotating winding drum 24, the rotation speed of the winding drum 24 and the average value (standard speed) of the travelling speed of the spun yarn 20 are in a constant proportional relationship. As described above, the CPU 47 acquires the rotational information, which is the information relating to the rotation speed of the winding drum 24, in accordance with the rotation pulse signal from the rotation sensor 42. The CPU 47 is configured to obtain approximate travelling speed (standard speed) of the spun yarn 20 in accordance with the rotational information of the winding drum 24 acquired as described above. Since the standard speed is obtained in this manner, the CPU 47 may be referred to be functioning as the standard speed acquiring section 72.

As described above, the weighting curve is set by synthesizing the history weighting curve and the standard speed weighting curve. Therefore, the CPU 47 can perform weighting in view of both the past maximum delay amount and the standard speed by performing the weighting using the weighing curve. Specifically, the weighting curve is defined with the following equation.

$$W_{c\_index} = S'_p \times W_P + (1 - S'_p) \times W_A \qquad \dots (8)$$

$S'_p$ is the maximum value of the weighted similarity degree in the preceding yarn travelling speed acquiring processing. As is apparent from the equation (8), the history weighting is given greater importance when the value of $S'_p$ is great. On the other hand, the standard speed weighting is given greater importance when the value of $S'_p$ is small. That is, if the value of $S'_p$ is small, this means that the waveforms of the upstream frame and the downstream frame do not overlap greatly in the preceding yarn travelling speed acquiring processing, and hence the history weighting curve for performing weighting on the similarity degree in accordance with the preceding result has low reliability. In such a case, therefore, the standard speed weighting is given more importance when performing the weighting on the similarity degree. FIG. 12 illustrates an example of the weighting curve obtained by the equation (8).

In the present embodiment, a constant w can be set by the user. For example, the user can operate an input device of the main control device of the automatic winder to set the value of the constant w. A command to change the constant w is then transmitted from the main control device to the CPU 47 of each winder unit 10. The CPU 47 that has received the command adopts the specified value of the constant w and sets the weighting curve. Since the weighting curve can be adjusted as described above, the CPU 47 may be referred to be functioning as the curve adjusting section 74.

FIG. 12 illustrates a state of the weighting curve when the constant w is changed. An upper graph in FIG. 12 illustrates a weighting curve when w = 16. A middle graph in FIG. 12 illustrates a weighting curve when w = 64. A lower graph in FIG. 12 illustrates a weighting curve when w = 128. As illustrated in FIG. 12, if a small value is set for the constant w, the weighting curve becomes a pointed curve, and hence the similarity degree in proximity to the peak of the relevant weighting curve is given more importance. On the other hand, if a large value is set for the constant w, the weighting curve becomes a gradual curve, and hence moderate influence of weighting by the weighting curve is obtained. Therefore, the user can change the constant w according to circumstances and adjust the weighting curve, so that the clearer 15 can appropriately obtain the travelling speed of the spun yarn 20.

For example, if the acceleration of the travelling spun yarn 20 is large, the speed significantly changes from the previously obtained travelling speed of the spun yarn 20, and the position of the peak of the similarity degree is assumed to greatly move. In a pointed weighting curve, the value of the weighting drastically becomes small when moving away from the position of the previous result, and hence a correct result cannot be obtained if the peak position of the similarity degree greatly moves from the previous position. Therefore, if the acceleration of the travelling spun yarn 20 is large, a large value is set for the constant w, and the weighting curve is adjusted to be a gradual curve. The CPU 47 thus can easily respond even if the travelling speed of the spun yarn 20 is significantly changed from the previously obtained travelling speed.

On the other hand, if the acceleration of the travelling spun yarn 20 is small, the speed transitions in proximity to the travelling speed of the spun yarn 20 obtained the previous time, and hence the position of the peak of the similarity degree is assumed to not greatly move. In this case, only the proximity of the previous peak position is to be given attention to detect the position of the peak of the similarity degree. Therefore, by setting a small value for the constant w and giving more importance to proximity of the previous result, the clearer 15 can accurately measure the travelling speed of the spun yarn 20.

The constant w may be differed in the equation (7) of the standard speed weighting curve and the equation (6) of the history weighting curve. In this case, the user may adjust at least one of the constants w. According to such a configuration, the shape of the standard speed weighting curve and the history weighting curve can be differed such that the standard speed weighting curve is a pointed curve and the history weighting curve is a moderate curve. Accordingly, an adjustment may be made to at least one of the influence rate with respect to the weighting curve of the preceding weighted similarity degree maximum value (large weighted similarity degree of the past) and the influence rate with respect to the weighting curve of the standard speed can be adjusted. If the user determines that the reliability of the history weighting is higher, the constant w of the history weighting curve is made smaller than that of the standard speed weighting curve to have the history weighting curve as a pointed curve so that the history weighting has a large influence on the maximum point of the weighting curve.

As described above, the clearer 15 of the present embodiment includes the first yarn unevenness detecting sensor 43, the second yarn unevenness detecting sensor 44, the similarity degree evaluating section 65, the weighting processing section 66, and the travelling information acquiring section 67. The first yarn unevenness detecting sensor 43 detects the thickness unevenness of the travelling spun yarn 20 and outputs the first yarn thickness unevenness signal. The second yarn unevenness detecting sensor 44 is arranged at a prescribed distance from the first yarn unevenness detecting sensor 43 in the yarn travelling direction to detect the thickness unevenness of the spun yarn 20 and output the second yarn thickness unevenness signal. The similarity degree evaluating section 65 obtains a plurality of similarity degrees of the first yarn thickness unevenness signal and the second yarn thickness unevenness signal in accordance with the first yarn thickness unevenness signal acquired during a prescribed first time range and the second yarn thickness unevenness signal acquired during a second time range longer than the first time range. The weighting processing section 66 performs the weighting processing on the plurality of similarity degrees to obtain a plurality of weighted similarity degrees . The travelling information acquiring section 67 calculates the time delay amount between the first yarn thickness unevenness signal and the second yarn thickness unevenness signal in accordance with the weighted similarity degree, and acquires the fixed yarn length pulse signal in accordance with the prescribed distance and the delay amount.

As described above, by performing the weighting processing on the similarity degrees, the probability of selecting the wrong maximum point when the plurality of maximum points of the similarity degrees exist can be lowered. The clearer 15 thus can accurately calculate the time delay amount of the second yarn thickness unevenness signal with respect to the first yarn thickness unevenness signal. As a result, the clearer 15 can acquire an accurate fixed yarn length pulse signal.

In the clearer 15 of the present embodiment, the first yarn unevenness detecting sensor 43 is arranged downstream of the second yarn unevenness detecting sensor 44. The clearer 15 thus can calculate the time delay amount of the upstream past yarn thickness unevenness signal on the upstream side with respect to the most recent downstream yarn thickness unevenness signal on the downstream side, so that the travelling information of the spun yarn 20 can be detected in real time.

In the clearer 15 of the present embodiment, the similarity degree evaluating section 65 obtains the similarity degree by comparing the downstream frame and the upstream frame. The downstream frame is formed from the waveform data series (first waveform data series) of the first yarn thickness unevenness signal acquired during the first time range. The upstream frame is formed from the waveform data series acquired during the time range of the same length as the first time range of the waveform data series among the second yarn thickness unevenness signal acquired during the second time range (second waveform data series). The similarity degree evaluating section 65 selects a plurality of positions on the time axis of the upstream frame within the second time range to obtain a plurality of similarity degrees. Since the plurality of similarity degrees can be obtained within the second time range, the weighting processing section 66 can perform weighting on the plurality of similarity degrees.

In the clearer 15 of the present embodiment, the travelling information acquiring section 67 can acquire the fixed yarn length pulse signal, the traveled length of the spun yarn 20 per unit time, and the travelling speed of the spun yarn 20 in accordance with the prescribed distance and the delay amount. According to the present embodiment, the delay amount between the first yarn thickness unevenness signal and the second yarn thickness unevenness signal can be accurately calculated as described above, and the clearer 15 can accurately obtain the fixed yarn length pulse signal, the traveled length of the spun yarn 20 per unit time, the travelling speed of the spun yarn 20, and the like.

In the clearer 15 of the present embodiment, the weighting processing section 66 performs the weighting on the raw similarity degree using the weighting factor specified by the weighting curve having one maximum point. By setting an appropriate weighting curve having one maximum point, the clearer 15 can easily calculate the time delay amount in accordance with the weighted similarity degree associated with the maximum point. As a result, the clearer 15 can accurately calculate the delay amount between the first yarn thickness unevenness signal and the second yarn thickness unevenness signal.

In the clearer 15 of the present embodiment, the maximum point of the weighting curve is set in accordance with the time delay amount associated with the maximum weighted similarity degree of the plurality of past weighted similarity degrees. The travelling information of the spun yarn 20 acquired by the clearer 15 is often not significantly different from the previously acquired travelling information. Therefore, large weighting is performed on the similarity degree associated with the past maximum weighted similarity degree so that the result that is not significantly different from the previously acquired travelling information is easily detected, and the reliability of the weighted similarity degree is improved.

The clearer 15 of the present embodiment includes the standard speed acquiring section 72 that acquires the standard speed of the travelling speed of the spun yarn 20. The maximum point of the weighting curve is set in accordance with the time delay amount associated with the standard speed. The travelling speed of the travelling spun yarn 20 is assumed to fluctuate with a certain standard speed as the center. Therefore, by configuring the clearer 15 as described above, and performing a large weighting on the similarity degree associated with the standard speed, the reliability of the weighted similarity degree can be improved.

In the clearer 15 of the present embodiment, the maximum point of the weighting curve is set in accordance with the weighting curve based on the time delay amount associated with the maximum weighted similarity degree among the plurality of past weighted similarity degrees, and the weighting curve in based on the time delay amount associated with the standard speed. The clearer 15 thus can more accurately acquire the travelling information of the spun yarn 20 by setting the weighting curve in accordance with a plurality of characteristics.

In the clearer 15 of the present embodiment, the standard speed acquiring section 72 obtains the standard speed by acquiring the rotation speed of the winding drum 24 that drives the package around which the spun yarn 20 is wound. The travelling speed of the spun yarn 20 is correlated with the rotation speed of the winding drum 24. The standard speed acquiring section 72 thus can acquire the rotational information of the winding drum 24 as described above, and then obtain the standard speed in accordance with the relevant rotational information.

The clearer 15 of the present embodiment includes the curve adjusting section 74 for adjusting at least either one of the influence rate of the past maximum weighted similarity degree on the form of the weighting curve or the influence rate of the standard speed on the form of the weighting curve. The clearer 15 thus can carry out an appropriate weighting processing according to the characteristics of the clearer 15, that is, the characteristics of the accuracy of the standard speed and the magnitude of the change in the yarn travelling speed (change in yarn travelling speed at a certain moment). As a result, the clearer 15 can acquire accurate travelling information of the spun yarn 20 in accordance with the characteristics or the like of the clearer 15.

In the clearer 15 of the present embodiment, when the maximum value correspondence similarity degree is smaller than the threshold determined in accordance with the preceding maximum value correspondence similarity degree, the travelling information acquiring section 67 acquires the travelling speed of the spun yarn 20 in accordance with the past weighted similarity degree maximum value. The clearer 15 thus can acquire the travelling information of the spun yarn 20 in accordance with an appropriate similarity degree, so that accuracy of the travelling information can be further improved.

The clearer 15 of the present embodiment includes the threshold re-evaluating section 73 for performing a processing to reduce the threshold accompanying an elapse of time. The travelling information such as the travelling speed of the spun yarn 20 constantly changes, and the reliability of the past similarity degree lowers. Therefore, by evaluating the threshold to be smaller accompanying the elapse of time as described above, the past similarity degree with lowered reliability can be prevented from being used endlessly.

The automatic winder of the present embodiment includes the clearer 15, the winding section 31 for winding the spun yarn 20 to form the package 30, and the unit control section 50 for controlling the winding by the winding section 31 in accordance with the travelling information of the spun yarn 20 detected by the clearer 15. Since the automatic winder includes the clearer 15, the automatic winder can acquire the accurate travelling speed of the spun yarn 20. Since the automatic winder forms the package in accordance with the accurate travelling speed of the spun yarn 20, a uniform and high quality package can be produced.

The preferred embodiments of the present invention have been described above, but the above configuration may be modified as below.

In the above embodiment, the spun yarn 20 is traversed on the surface of the package 30 while rotating the package 30 by the rotating winding drum 24. The configuration of the present invention can be applied even to a yarn winding machine having a configuration in which the driving of the package and the traversing are independent. Such a yarn winding machine includes an automatic winder provided with an arm-type traverse device that traverses the spun yarn with a swinging arm, and a belt-type traverse device that traverses the spun yarn with a yarn hooking member that reciprocates to the left and the right by a belt.

The configuration of the present invention is not limited to the automatic winder, and may be applied to other types of yarn winding machine such as a fine spinning machine.

In the above embodiment, the change in the light receiving amount is monitored by the yarn unevenness detecting sensor (detecting section). However, for example, a yarn unevenness detecting sensor of a type that detects the change in electrostatic capacitance of the travelling spun yarn may be adopted. With such a configuration, the change in mass per unit length of the spun yarn can be detected. In other words, the yarn unevenness detecting sensor is sufficient to be configured to detect the thickness unevenness of the spun yarn by some kind of method.

In the above embodiment, the weighting curve in which the history weighting and the standard speed weighting are combined is used, but the present invention is not limited thereto. For example, only the standard speed weighting curve may be used alone as the weighting curve. The weighting curve does not need to be in a form of exponential function as described in the embodiment, and merely needs to be able to perform weighting in some form. The curve adjusting section may be omitted if the weighting curve does not need to be adjusted by the user.

In the embodiment described above, the weighting curve is defined as the exponential function (exp function), but the present invention is not limited thereto, and any function can be used for the definition of the weighting curve as long as the function has one maximum point.

The weighted similarity degree adoption determination processing may be omitted.

In the clearer 15, description has been made that the yarn travelling information such as the fixed yarn length pulse signal and the travelling speed of the spun yarn 20 is acquired, but instead, other yarn travelling information may be acquired. For example, the total length of the traveled spun yarn 20 may be obtained by integrating the obtained travelling speed by time.

In the clearer 15, for example, only the time delay $\Delta T$ of the waveform may be obtained without calculating the travelling speed of the spun yarn 20. Since the time delay $\Delta T$ of the waveform generates when the spun yarn 20 travels, the time delay $\Delta T$ can be considered the travelling information of the spun yarn 20. In this case, the time delay $\Delta T$ of the waveform obtained by the clearer 15 is output to the unit control section 50, and calculation of the travelling speed of the spun yarn 20 using $\Delta T$ can be carried out in the unit control section 50.

In the above embodiment, the travelling speed of the spun yarn 20 calculated by the clearer 15 is output to the unit control section 50, but the travelling speed may be output as numerical data or may be output in other forms. For example, the fixed yarn length pulse signal described above may be output to the unit control section 50.

Since the second A/D converter 46 arranged in the clearer 15 is for performing FFT calculation, the second A/D converter 46 may be omitted if the FFT calculation is not carried out.

In the above embodiment, the standard speed is acquired in accordance with the rotation pulse signal from the rotary encoder, but the present invention is not limited thereto. That is, an average travelling speed (standard speed) of the spun yarn merely needs to be detected by some method.

In the above embodiment, the time delay $\Delta T$ between the waveform data of the upstream ring buffer 56 and the waveform data of the downstream ring buffer 55 is obtained in accordance with the maximum value correspondence delay amount, and the travelling speed of the spun yarn 20 is further calculated in accordance with such $\Delta T$. However, the method of calculating the yarn travelling speed is not limited thereto, and the yarn travelling speed may be obtained in accordance with the ratio of the maximum value correspondence delay amount and the standard delay amount, for example. Specifically, a travelling speed V of the spun yarn can be calculated with the following equation using a standard speed V_ave and a standard delay amount offset.

```
V = V_ave × (currently adopted maximum value correspondence delay
amount / offset)
```

In the above embodiment, the head position of the downstream frame is fixed, and the similarity degree is obtained while shifting the head position of the upstream frame. In place of this configuration, the head position of the upstream frame may be fixed, and the similarity degree may be obtained while shifting the head position of the downstream frame. The similarity degree may be obtained while shifting both the downstream frame and the upstream frame. However, if the downstream frame is fixed at a position including the most recent data of the waveform data included in the downstream ring buffer, the similarity degree can be calculated in real time while always using the most recent data.

In the above embodiment, the functions of the similarity degree evaluating section 65, the weighting processing section 66, the travelling information acquiring section 67, the yarn quality measuring section 68, the standard speed acquiring section 72, the threshold re-evaluating section 73, the curve adjusting section 74, and the like are realized by hardware and software, but some or all of these functions may be realized with a dedicated hardware.

**Claims**

**1.** A yarn travelling information acquiring device comprising:

a first detecting section (43) adapted to detect thickness unevenness in travelling yarn and output a first yarn thickness unevenness signal;

a second detecting section (44) arranged at a prescribed distance in a yarn travelling direction from the first detecting section (43) and adapted to detect thickness unevenness in the yarn and output a second yarn thickness unevenness signal;

a similarity degree evaluating section (65) adapted to determine a plurality of similarity degrees of the first yarn thickness unevenness signal and the second yarn thickness unevenness signal in accordance with the first yarn thickness unevenness signal acquired within a prescribed first time range and the second yarn thickness unevenness signal acquired within a second time range that is longer than the first time range;

a weighting processing section (66) adapted to execute a weighting processing on the plurality of the similarity degrees and determine a plurality of weighted similarity degrees; and

a travelling information acquiring section (67) adapted to calculate a time delay amount between the first yarn thickness unevenness signal and the second yarn thickness unevenness signal corresponding to the maximum weighted similarity degree of the plurality of weighted similarity degrees, and acquire travelling information of the yarn in accordance with the prescribed distance and the time delay amount,

wherein the similarity degree evaluating section (65) is adapted to determine the similarity degrees by comparing a first imaginary frame and a second imaginary frame, the first imaginary frame being formed from the first yarn thickness unevenness signal acquired within the first time range, and the second imaginary frame being formed from the second yarn thickness unevenness signal acquired within the second time range and selected for a time range that is the same length as the first time range, and

wherein the similarity degree evaluating section (65) is adapted to determine a plurality of similarity degrees by selecting a plurality of positions on a time axis of the second imaginary frame within the second time range, wherein the weighting processing section (66) is adapted to execute the weighting processing on the similarity degree using a weighting factor designated by a weighting curve having one maximum point, and

wherein one of following features a), b) or c) is fulfilled:

a) the maximum point of the weighting curve is set in accordance with a time delay amount associated with a maximum weighted similarity degree among plurality of past weighted similarity degrees,

b) the yarn travelling information acquiring device further comprises a standard speed acquiring section (72) adapted to acquire standard speed of travelling speed of the yarn, wherein the maximum point of the weighting curve is set in accordance with a time delay amount associated with the standard speed, and

c) the yarn travelling information acquiring device further comprises a standard speed acquiring section (72) adapted to acquire standard speed of travelling speed of the yarn, wherein the maximum point of the weighting curve is set in accordance with a weighting curve in accordance with a time delay amount associated with a maximum weighted similarity degree among the plurality of the past weighted similarity degrees and a weighting curve in accordance with a time delay amount associated with the standard speed.

2. The yarn travelling information acquiring device according to claim 1, wherein the first detecting section (43) is arranged downstream of the second detecting section (44).

3. The yarn travelling information acquiring device according to any one of claim 1 or 2, wherein the travelling information acquiring section (67) is adapted to acquire at least one piece of travelling information among a signal for sampling a prescribed length of the yarn, a traveled length of the yarn per unit time, and travelling speed of the yarn, in accordance with the prescribed distance and the delay amount.

4. The yarn travelling information acquiring device according to claim 1, wherein b) or c) are fulfilled, and wherein the standard speed acquiring section (72) is adapted to acquire information relating to rotation of a winding drum (24), which drives a package around which the yarn is wound, and to obtain the standard speed in accordance with the information relating to rotation.

5. The yarn travelling information acquiring device according to any one of claim 1 through claim 4, further comprising a curve adjusting section (74) adapted to adjust at least one of an influence rate at which the past maximum weighted similarity degree influences a form of the weighting curve, and an influence rate at which the standard speed influences a form of the weighting curve.

6. The yarn travelling information acquiring device according to any one of claim 1 through claim 5, wherein when a similarity degree of when the weighted similarity degree becomes maximum is less than a threshold determined in accordance with a past similarity degree, the travelling information acquiring section (67) is adapted to acquire travelling information of the yarn in accordance with the past weighted similarity degree.

7. The yarn travelling information acquiring device according to claim 6, further comprising a threshold re-evaluating section (73) adapted to perform a processing to reduce the threshold accompanying an elapse of time.

8. A yarn winding machine comprising:

the yarn travelling information acquiring device (15) according to any one of claim 1 through claim 7,
a winding section (31) adapted to wind the yarn and form a package, and
a control section (50) adapted to control winding of the winding section (31) in accordance with travelling information of the yarn detected by the yarn travelling information acquiring device (15).

**Patentansprüche**

1. Eine Garnbewegungsinformationserfassungsvorrichtung, die folgende Merkmale aufweist:

einen ersten Detektionsbereich (43), der dazu angepasst ist, eine Dickenungleichmäßigkeit bei dem sich bewegenden Garn zu detektieren und ein erstes Garndickenungleichmäßigkeitssignal auszugeben;
einen zweiten Detektionsbereich (44), der in einer Garnbewegungsrichtung an einem vorgeschriebenen Abstand von dem ersten Detektionsbereich (43) angeordnet ist und dazu angepasst ist, eine Dickenungleichmäßigkeit in dem Garn zu detektieren und ein zweites Garndickenungleichmäßigkeitssignal auszugeben;
einen Ähnlichkeitsgradbewertungsbereich (65), der dazu angepasst ist, eine Mehrzahl von Ähnlichkeitsgraden des ersten Garndickenungleichmäßigkeitssignals und des zweiten Garndickenungleichmäßigkeitssignals gemäß dem ersten Garndickenungleichmäßigkeitssignal, das in einem vorgeschriebenen ersten Zeitraum erfasst wird, und dem zweiten Garndickenungleichmäßigkeitssignal, das in einem zweiten Zeitraum erfasst wird, der länger ist als der erste Zeitraum, zu bestimmen;
einen Gewichtungsverarbeitungsbereich (66), der dazu angepasst ist, eine Gewichtungsverarbeitung an der Mehrzahl der Ähnlichkeitsgrade durchzuführen und eine Mehrzahl von gewichteten Ähnlichkeitsgraden zu bestimmen; und
einen Bewegungsinformationserfassungsbereich (67), der dazu angepasst ist, eine Zeitverzögerungsgröße zwischen dem ersten Garndickenungleichmäßigkeitssignal und dem zweiten Garndickenungleichmäßigkeitssignal zu berechnen, die dem maximalgewichteten Ähnlichkeitsgrad der Mehrzahl von gewichteten Ähnlichkeitsgraden entspricht, und Bewegungsinformationen des Garns gemäß dem vorgeschriebenen Abstand und der Zeitverzögerungsgröße zu erfassen,
wobei der Ähnlichkeitsgradbewertungsbereich (65) dazu angepasst ist, die Ähnlichkeitsgrade durch Vergleichen eines ersten imaginären Rahmens und eines zweiten imaginären Rahmens zu bestimmen, wobei der erste imaginäre Rahmen aus dem ersten Garndickenungleichmäßigkeitssignal gebildet wird, das in dem ersten Zeitraum erfasst wird, und der zweite imaginäre Rahmen aus dem zweiten Garndickenungleichmäßigkeitssignal gebildet wird, das in dem zweiten Zeitraum erfasst wird und für einen Zeitraum ausgewählt wird, der die gleiche Länge wie der erste Zeitraum aufweist, und
wobei der Ähnlichkeitsgradbewertungsbereich (65) dazu angepasst ist, eine Mehrzahl von Ähnlichkeitsgraden durch Auswählen einer Mehrzahl von Positionen auf einer Zeitachse des zweiten imaginären Rahmens in dem zweiten Zeitraum zu bestimmen,
wobei der Gewichtungsverarbeitungsbereich (66) dazu angepasst ist, die Gewichtungsverarbeitung an dem Ähnlichkeitsgrad unter Verwendung eines Gewichtungsfaktors auszuführen, der durch eine Gewichtungskurve mit einem Maximalpunkt bestimmt ist, und
wobei eines der folgenden Merkmale a), b) oder c) erfüllt ist:

a) der Maximalpunkt der Gewichtungskurve ist gemäß einer Zeitverzögerungsgröße festgelegt, die einem maximalgewichteten Ähnlichkeitsgrad aus einer Mehrzahl von vergangenen gewichteten Ähnlichkeitsgraden zugeordnet ist,
b) die Garnbewegungsinformationserfassungsvorrichtung weist ferner einen Standardgeschwindigkeitserfassungsbereich (72) auf, der dazu angepasst ist, eine Standardgeschwindigkeit einer Bewegungsgeschwindigkeit des Garns zu erfassen, wobei der Maximalpunkt der Gewichtungskurve gemäß einer Zeitverzögerungsgröße festgelegt ist, die der Standardgeschwindigkeit entspricht, und
c) die Garnbewegungsinformationserfassungsvorrichtung weist ferner einen Standardgeschwindigkeitserfassungsbereich (72) auf, der dazu angepasst ist, eine Standardgeschwindigkeit einer Bewegungsgeschwindigkeit des Garns zu erfassen, wobei der Maximalpunkt der Gewichtungskurve gemäß einer Gewichtungskurve gemäß einer Zeitverzögerungsgröße, die einem maximalgewichteten Ähnlichkeitsgrad aus der Mehrzahl der vergangenen gewichteten Ähnlichkeitsgrade zugeordnet ist, und einer Gewichtungskurve gemäß einer Zeitverzögerungsgröße festgelegt ist, die der Standardgeschwindigkeit zugeordnet ist.

2. Die Garnbewegungsinformationserfassungsvorrichtung gemäß Anspruch 1, bei der der erste Detektionsbereich (43) in Verarbeitungsrichtung nach dem zweiten Detektionsbereich (44) angeordnet ist.

3. Die Garnbewegungsinformationserfassungsvorrichtung gemäß einem der Ansprüche 1 oder 2, bei der der Bewegungsinformationserfassungsbereich (67) dazu angepasst ist, zumindest eine Bewegungsinformation aus einem Signal zum Abtasten einer vorgeschriebenen Länge des Garns, einer zurückgelegten Länge des Garns pro Zeiteinheit, und einer Bewegungsgeschwindigkeit des Garns gemäß dem vorgeschriebenen Abstand und der Verzögerungsgröße zu erfassen.

4. Die Garnbewegungsinformationserfassungsvorrichtung gemäß Anspruch 1, bei der b) oder c) erfüllt sind und bei der der Standardgeschwindigkeitserfassungsbereich (72) dazu angepasst ist, Informationen bezüglich einer Drehung einer Wicklungstrommel (24), die einen Garnkörper antreibt, um den das Garn gewickelt ist, zu erfassen und die Standardgeschwindigkeit gemäß den Informationen bezüglich einer Drehung zu erhalten.

5. Die Garnbewegungsinformationserfassungsvorrichtung gemäß einem der Ansprüche 1 bis 4, die ferner einen Kurvenanpassungsbereich (74) aufweist, der dazu angepasst ist, zumindest eine Einflussrate, mit der der vergangene maximalgewichtete Ähnlichkeitsgrad eine Form der Gewichtungskurve beeinflusst, und/oder eine Einflussrate anzupassen, mit der die Standardgeschwindigkeit eine Form der Gewichtungskurve beeinflusst.

6. Die Garnbewegungsinformationserfassungsvorrichtung gemäß einem der Ansprüche 1 bis 5, bei der, wenn ein Ähnlichkeitsgrad dann, wenn der gewichtete Ähnlichkeitsgrad maximal wird, geringer als eine Schwelle ist, die gemäß einem vergangenen Ähnlichkeitsgrad bestimmt wird, der Bewegungsinformationserfas-sungsbereich (67) dazu angepasst ist, Bewegungsinformationen des Garns gemäß dem vergangenen gewichteten Ähnlichkeitsgrad zu erfassen.

7. Die Garnbewegungsinformationserfassungsvorrichtung gemäß Anspruch 6, die ferner einen Schwellenreevaluierungsbereich (73) aufweist, der dazu angepasst ist, eine Verarbeitung durchzuführen, um die Schwelle zu reduzieren, die ein Verstreichen von Zeit begleitet.

8. Eine Garnwicklungsmaschine, die folgende Merkmale aufweist:

die Garnbewegungsinformationserfassungsvorrichtung (15) gemäß einem der Ansprüche 1 bis 7, einen Wicklungsbereich (31), der dazu angepasst ist, das Garn zu wickeln und einen Garnkörper zu bilden, und einen Steuerbereich (50), der dazu angepasst ist, eine Wicklung des Wicklungsbereiches (31) gemäß Bewegungsinformationen des Garns zu steuern, die durch die Garnbewegungsinformationserfassungsvorrichtung (15) detektiert werden.

**Revendications**

1. Dispositif d'acquisition d'informations de déplacement de fil, comprenant:

un premier segment de détection (43) adapté pour détecter une irrégularité d'épaisseur dans un fil en déplacement et sortir un premier signal d'irrégularité d'épaisseur de fil;
un deuxième segment de détection (44) disposé à une distance prédéterminée dans une direction de déplacement de fil du premier segment de détection (43) et adapté pour détecter une irrégularité d'épaisseur dans le fil et sortir un deuxième signal d'irrégularité d'épaisseur de fil;
un segment d'évaluation de degré de similitude (65) adapté pour déterminer une pluralité de degrés de similitude du premier signal d'irrégularité d'épaisseur de fil et du deuxième signal d'irrégularité d'épaisseur de fil selon le premier signal d'irrégularité d'épaisseur de fil acquis dans un premier intervalle de temps prescrit et le deuxième signal d'irrégularité d'épaisseur de fil acquis dans un deuxième intervalle de temps qui est plus long que le premier intervalle de temps;
un segment de traitement de pondération (66) adapté pour exécuter un traitement de pondération sur la pluralité des degrés de similitude et pour déterminer une pluralité de degrés de similitude pondérés; et
un segment d'acquisition d'informations (67) adapté pour calculer une quantité de temps de retard entre le premier signal d'irrégularité d'épaisseur de fil et le deuxième signal d'irrégularité d'épaisseur de fil correspondant au degré de similitude pondéré maximum de la pluralité de degrés de similitude pondérés, et pour acquérir les informations de déplacement du fil selon la distance prescrite et la quantité de temps de retard,

dans lequel le segment d'évaluation de degré de similitude (65) est adapté pour déterminer les degrés de similitude en comparant une première trame imaginaire et une deuxième trame imaginaire, la première trame imaginaire étant formée à partir du premier signal d'irrégularité d'épaisseur acquis dans le premier intervalle de temps, et la deuxième trame imaginaire étant formée à partir du deuxième signal d'irrégularité d'épaisseur de fil acquis dans le deuxième intervalle de temps et sélectionnée pour un intervalle de temps qui est de même longueur que le premier intervalle de temps, et

dans lequel le segment d'évaluation de degré de similitude (65) est adapté pour déterminer une pluralité de degrés de similitude en sélectionnant une pluralité de positions sur un axe de temps de la deuxième trame imaginaire dans le deuxième intervalle de temps,

dans lequel le segment de traitement de pondération (66) est adapté pour exécuter le traitement de pondération sur le degré de similitude à l'aide d'un facteur de pondération désigné par une courbe de pondération présentant un point maximum, et

dans lequel est remplie l'une des caractéristiques suivantes a), b) ou c):

a) le point maximum de la courbe de pondération est établi selon une quantité de temps de retard associée à un degré de similitude pondéré maximum parmi la pluralité de degrés de similitude pondérés passés,

b) le dispositif d'acquisition d'informations de déplacement de fil comprend par ailleurs un segment d'acquisition de vitesse standard (72) adapté pour acquérir la vitesse de déplacement standard du fil, où le point maximum de la courbe de pondération est établi selon un temps de retard associé à la vitesse standard, et

c) le dispositif d'acquisition d'informations de déplacement de fil comprend par ailleurs un segment d'acquisition de vitesse standard (72) adapté pour acquérir la vitesse de déplacement standard du fil, où le point maximum de la courbe de pondération est établi selon une courbe de pondération selon une quantité de temps de retard associée à un degré de similitude pondéré maximal parmi la pluralité des degrés de similitude pondérés passés et une courbe de pondération selon une quantité de temps de retard associée à la vitesse standard.

2. Dispositif d'acquisition d'informations de déplacement de fil selon la revendication 1, dans lequel le premier segment de détection (43) est disposé en aval du deuxième segment de détection (44).

3. Dispositif d'acquisition d'informations de déplacement de fil selon l'une quelconque des revendications 1 ou 2, dans lequel le segment d'acquisition d'informations de déplacement (67) est adapté pour acquérir au moins une information de déplacement parmi un signal d'échantillonnage d'une longueur prescrite du fil, une longueur parcourue du fil par unité de temps, et la vitesse de déplacement du fil, selon la distance prescrite et à la quantité de temps de retard.

4. Dispositif d'acquisition d'informations de déplacement de fil selon la revendication 1, dans lequel b) ou c) sont remplies, et dans lequel le segment d'acquisition de vitesse standard (72) est adapté pour acquérir les informations relatives à la rotation d'un tambour d'enroulement (24) qui entraîne un paquet autour duquel est enroulé le fil, et pour obtenir la vitesse standard selon les informations relatives à la rotation.

5. Dispositif d'acquisition d'informations de déplacement de fil selon l'une quelconque de la revendication 1 à la revendication 4, comprenant par ailleurs un segment d'ajustement de courbe (74) adapté pour ajuster au moins l'un parmi un taux d'influence selon lequel le degré de similitude pondéré maximum passé influence une forme de la courbe de pondération, et un taux d'influence selon lequel la vitesse standard influence une forme de la courbe de pondération.

6. Dispositif d'acquisition d'informations de déplacement de fil selon l'une quelconque de la revendication 1 à la revendication 5, dans lequel, quand un degré de similitude au moment où le degré de similitude pondéré devient maximum est inférieur à un seuil déterminé selon un degré de similitude passé, le segment (67) d'acquisition d'informations de déplacement est adapté pour acquérir les informations de déplacement du fil selon le degré de similitude pondéré passé.

7. Dispositif d'acquisition d'informations de déplacement de fil selon la revendication 6, comprenant par ailleurs un segment de réévaluation de seuil (73) adapté pour effectuer un traitement pour réduire le seuil accompagnant un passage du temps.

8. Machine de bobinage de fil, comprenant:

le dispositif d'acquisition d'informations de déplacement de fil (15) selon l'une quelconque de la revendication 1 à la revendication 7,
un segment d'enroulement (31) adapté pour enrouler le fil et former un paquet, et
un segment de commande (50) adapté pour commander l'enroulement du segment de bobinage (31) selon les informations de déplacement du fil détectées par le dispositif d'acquisition d'informations de déplacement de fil (15).

# FIG. 1

# FIG. 2

# FIG. 3

EP 2 423 144 B1

# FIG. 4

SIGNAL LEVEL

FIRST TIME RANGE

DOWNSTREAM
RING BUFFER

[0]     [32]     [64]     [96]     [127]

index

TIME LAG OF
WAVEFORM

SIGNAL LEVEL

SECOND TIME RANGE

UPSTREAM
RING BUFFER

[0]     [32]     [64]     [96]     [127]

index

# FIG. 5

# FIG. 6

EP 2 423 144 B1

# FIG. 7

SIMILARITY DEGREE

1

0

0        16        32

DELAY AMOUNT

# FIG. 8

START

DOWNSTREAM FRAME BIAS
COMPONENT REMOVAL AND
NORMALIZATION PROCESSING — S101

INITIALIZATION OF DELAY
AMOUNT OF UPSTREAM FRAME — S102

UPSTREAM FRAME BIAS
COMPONENT REMOVAL AND
NORMALIZATION PROCESSING — S103

CALCULATE
SIMILARITY DEGREE — S104

WEIGHTING
PROCESSING

S105

STORE DELAY AMOUNT
IN WHICH WEIGHTED
SIMILARITY DEGREE
BECOMES MAXIMUM — S106

RANGE
OF MOVING FRAME
FINISHED? — S107

No

Yes

ADOPTION DETERMINATION
PROCESSING — S109

CONVERT
ADOPTED DELAY AMOUNT
TO SPEED — S110

MOVE
UPSTREAM FRAME — S108

END

# FIG. 9

# FIG. 10

```
         ADOPTION DETERMINATION
              PROCESSING
```

S201

```
         CURRENT
      MAXIMUM VALUE
CORRESPONDENCE SIMILARITY DEGREE          No
   IS GREATER THAN OR EQUAL TO
         THRESHOLD?
```

Yes

S202

```
        ADOPT
CURRENT MAXIMUM VALUE
   CORRESPONDENCE
  SIMILARITY DEGREE
```

S203

```
        ADOPT
 PREVIOUSLY ADOPTED
   MAXIMUM VALUE
   CORRESPONDENCE
  SIMILARITY DEGREE
```

S204

```
SUCCEEDING THRESHOLD
= CURRENT MAXIMUM VALUE
  CORRESPONDENCE SIMILARITY DEGREE × 0.95
```

S205

```
SUCCEEDING THRESHOLD
= THRESHOLD × 0.95
```

```
         END
```

# FIG. 11

|                                                                      | n-2 | n-1 | n |
|----------------------------------------------------------------------|-----|-----|---|
| PREVIOUSLY SELECTED RAW SIMILARITY DEGREE × 0.95                      | 0.7 | 0.86 | 0.81 |
| CURRENTLY CALCULATED RAW SIMILARITY DEGREE                            | 0.9 | 0.6 | 0.9 |
| CURRENT MAXIMUM VALUE CORRESPONDENCE DELAY AMOUNT                     | 16  | 7   | 15 |
| CURRENTLY ADOPTED MAXIMUM VALUE CORRESPONDENCE DELAY AMOUNT           | 16  | 16  | 15 |

# FIG. 12

**EP 2 423 144 B1**

REFERENCES CITED IN THE DESCRIPTION

**Patent documents cited in the description**

- JP 51060551 A
- JP 6186242 A
- EP 2090538 A2
- US 4671650 A